# EUROPÄISCHE PATENTANMELDUNG

(11) **EP 4 461 591 A1**
(43) Veröffentlichungstag der Anmeldung: **13.11.2024**
(21) Anmeldenummer: 24173640.4
(22) Anmeldetag: 01.05.2024
(51) Int. Cl.: B60L 53/30, B60L 53/67, B60L 53/66, G06Q 50/06

(54) **VERFAHREN FÜR EIN ENERGIEABGABESYSTEM**

(30) Priorität: 02.05.2023 DE 102023111301
(71) Anmelder: Scheidt & Bachmann GmbH, 41238 Mönchengladbach (DE)
(72) Erfinder: Löffler, Dipl.-Kfm. Stephan, 41468 Neuss (DE); Adlon, M. Sc. Katharina, 52072 Aachen (DE); Noll, Elmar, 41068 Mönchengladbach (DE)
(74) Vertreter: Cohausz & Florack

(57) **Zusammenfassung**

Die Erfindung betrifft ein Energieabgabesystem (222, 422, 522, 622), umfassend ein Hintergrundsystem (100, 200) nach Anspruch 21, und zumindest einen ersten Abgabepunkt (224.1, 424.1, 524.1, 624.1) und einen zweiten Abgabepunkt (224.2, 424.2, 524.2, 624.2), wobei der erste Abgabepunkt (224.1, 424.1, 524.1, 624.1) und der zweite Abgabepunkt (224.2, 424.2, 524.2, 624.2) zumindest eine erste Abgabevorrichtung (226.1) mit einem ersten Beacon (240.1) und eine zweite Abgabevorrichtung (226.3) mit einem zweiten Beacon (240.3) umfassen.

## Beschreibung

Die Erfindung betrifft ein Verfahren zum Betreiben eines Energieabgabesystem, ein Energieabgabesystem, ein Computerprogramm und ein Hintergrundsystem.

Energieabgabesysteme, wie Kraftstoffabgabesysteme und/oder elektrische Ladesysteme, mit mindestens einem Abgabepunkt, wie einem Kraftstoffabgabepunkt und/oder einem Ladepunkt, zum Abgeben von Energie sind aus dem Stand der Technik bekannt. Insbesondere wird bei einem derartigen Energieabgabesystem Energie in Form von Kraftstoff (z.B. Benzin, Diesel etc.) und/oder elektrischer Energie an ein Fahrzeug abgegeben.

Ein Beispiel eines derartigen Energieabgabesystems ist ein Tankstellensystem. Ein Tankstellensystem umfasst eine oder mehrere Tankstelle/n. Eine Tankstelle umfasst als Kraftstoffabgabepunkt mindestens einen Zapfpunkt, in der Regel eine Mehrzahl von Zapfpunkten, eingerichtet zum Abgeben von Kraftstoff, wie flüssigen Kraftstoff (z.B. Diesel, Benzin etc.) oder gasförmigen Kraftstoff (z.B. Erdgas, Wasserstoff). Alternativ oder zusätzlich kann ein Tankstellensystem auch mindestens einen Abgabepunkt in Form eines Ladepunkts, insbesondere eine Mehrzahl von Ladepunkten, eingerichtet zum Abgeben von elektrischer Energie, umfassen. Das Abgeben von Energie erfolgt im Rahmen eines Abgabevorgangs, wie ein Ladevorgang und/oder Tankvorgang.

Ein Abgabepunkt kann wiederum eine oder mehrere Abgabevorrichtungen umfassen. Beispielsweise kann die Abgabevorrichtung (bei flüssigem Kraftstoff) durch eine Zapfpistole gebildet sein, die über einen Schlauch mit einer Basis des Abgabepunkts verbunden ist. Ferner kann beispielsweise die Abgabevorrichtung (bei elektrischer Energie) durch einen Ladestecker gebildet sein, der über ein Ladekabel mit einer Basis des Abgabepunkts verbunden ist. Es versteht sich, dass bei einem Abgabepunkt zum Abgeben von elektrischer Energie alternativ die Abgabevorrichtung durch eine Ladesteckdose gebildet sein kann.

Insbesondere nach einer Durchführung eines Abgabevorgangs ist eine Bezahlung des Abgabevorgangs entsprechend der an das Fahrzeug abgegebenen Energiemenge erforderlich. Bei einem Energieabgabesystem in Form einer Tankstelle (wobei eine Tankstelle vorliegend stets Abgabepunkte in Form von Zapfpunkten und/oder Ladepunkten umfassen kann) kann eine Bezahlung beispielsweise in herkömmlicher Weise in einen Shop der Tankstelle erfolgen.

Um die Dauer eines Abgabevorgangs samt Bezahlvorgang zu reduzieren und insbesondere die Nutzbarkeit des Energieabgabesystems zu verbessern, sind technische Lösungen bekannt, bei denen ein Nutzer den Bezahlvorgang mit seinem mobilen Endgerät durchführen kann. Der Nutzer muss bei dieser Lösung den Shop nicht mehr betreten und kann daher den Abgabepunkt mit seinem Fahrzeug schneller verlassen (auch als "Pay at the Pump" bezeichnet).

In der Regel ist auf dem mobilen Endgerät eine (aktivierbare) Energieabgabeanwendung in Form einer sogenannten App installiert, die von einem Prozessor des mobilen Endgeräts ausführbar ist. Aus dem Stand der Technik ist es bekannt, dass nach einem Aktivieren der Energieabgabeanwendung auf dem mobilen Endgerät eine Kommunikationsverbindung zu einem Hintergrundsystem des Energieabgabesystems aufgebaut wird. Das Hintergrundsystem stellt grundsätzlich durch den Nutzer auswählbare und durchgeführte Abgabevorgänge bereit. Zum Identifizieren bzw. Auffinden des von dem Nutzer tatsächlich durchgeführten Abgabevorgang, der bezahlt werden soll, wird zunächst die genutzte Tankstelle aus einer Vielzahl von auf dem mobilen Endgerät angezeigten Tankstellen des Energieabgabesystems durch den Nutzer ausgewählt. Zur Verbesserung des Nutzerkomforts ist aus dem Stand der Technik bekannt, dass die Energieabgabeanwendung ein Lokalisierungsmodul bzw. eine Lokalisierungsfunktion umfasst, um die genutzte Tankstelle zu bestimmen. Nach der Auswahl der Tankstelle kann durch den Nutzer der von ihm verwendete Abgabepunkt aus einer Mehrzahl von Abgabepunkten der ausgewählten Tankstelle (ggf. mit einer Angabe zum zu entrichtenden Betrag) ausgewählt werden.

In einem einfachen, jedoch nutzerunfreundlichen Fall muss erst die Tankstelle manuell aus einer Liste ausgesucht werden (z.B. anhand der Adresse) und anschließend muss die richtige Abgabepunktkennung, wie eine Abgabepunktnummer, aus einer Liste ausgesucht werden, oder die Abgabepunktkennung über eine Nutzerschnittstelle muss eingegeben werden. Wie beschrieben wurde, kann im Stand der Technik bisher allenfalls die verwendete Tankstelle automatisiert bestimmt werden, insbesondere anhand von in einem mobilen Endgerät integrierten Ortungsdiensten, wie eine Ortsbestimmung basierend auf GNSS (GPS, Galileo, GLONASS oder Beidou), basierend auf WLAN-Daten (z.B. SSID eines Tankstellen WLANs) und/oder basierend auf Bluetoothdaten (z.B. der UUID eines Bluetooth-Beacons bzw. -Senders an der Tankstelle). Insbesondere kann das Lokalisierungsmodul der Energieabgabeanwendung auf einen Ortungsdienst des mobilen Endgeräts zugreifen, um die verwendete Tankstelle automatisch zu bestimmen.

In der Praxis ist jedoch bisher ein automatisiertes Bestimmen des verwendeten Abgabepunkts bzw. des damit durchgeführten Abgabevorgangs nicht möglich. Hierbei ist erkannt worden, dass ein Grund dafür unter anderem ist, dass es notwendig ist, die Aufenthaltsorte von Nutzern geografisch und zeitlich kleinteilig aufgelöst zu erfassen und die zur gleichen Zeit auftretenden Betriebszustände der Abgabepunkte zu erfassen und mit den erfassten Aufenthaltsorten der Nutzer derart zu verknüpfen, dass mit einer hohen Wahrscheinlichkeit bestimmt werden kann, welcher Nutzer welchen Abgabepunt benutzt hat. Insbesondere wären der an den Tankstellen erforderliche Hardwareaufwand und der jeweils tankstelle-individuelle Konfigurationsaufwand im Stand der Technik sehr hoch. Der Prozess der manuellen Abgabepunkbestimmung durch einen Nutzer ist jedoch zeitaufwendig und zudem fehleranfällig.

Daher liegt der Erfindung die Aufgabe zugrunde, eine Möglichkeit bereitzustellen, welche die Nachteile des Stands der Technik zumindest reduziert und insbesondere in zuverlässiger, hardwarearmer und nutzerfreundlicher Weise das Bestimmen des von einem Nutzer für einen Abgabevorgang verwendeten Abgabepunkts eines Energieabgabesystems ermöglicht.

Die Aufgabe wird gemäß einem ersten Aspekt der Erfindung gelöst durch ein (computerimplementiertes) Verfahren nach Anspruch 1 zum Betreiben eines Energieabgabesystems mit einer Tankstelle, umfassend zumindest einen ersten Abgabepunkt und einen zweiten Abgabepunkt, wobei der erste Abgabepunkt mindestens eine erste Abgabevorrichtung mit einem ersten Beacon umfasst und der zweite Abgabepunkt mindestens eine zweite Abgabevorrichtung mit einem zweiten Beacon umfasst. Das Verfahren umfasst:
- wiederholendes Empfangen, durch ein erstes Empfangsmodul eines Hintergrundsystems des Energieabgabesystems, zeitabhängiger Endgerätedatensätze von einem ersten mobilen Endgerät,
- wobei jeder zeitabhängige Endgerätedatensatz zumindest enthält: eine Endgerätekennung des mobilen Endgeräts, eine erste Beaconkennung des ersten Beacons, eine zweite Beaconkennung des zweiten Beacons, ein erstes Beacon-Signalstärkedatum eines durch das erste mobile Endgerät empfangenen ersten Beaconsignals des ersten Beacons, ein zweites Beacon-Signalstärkedatum eines durch das erste mobile Endgerät empfangenen zweiten Beaconsignals des zweiten Beacons und ein Empfangszeitdatum,
- wiederholendes Empfangen, durch ein zweites Empfangsmodul des Hintergrundsystems, zeitabhängiger Abgabepunktdatensätze des ersten Abgabepunkts und des zweiten Abgabepunkts,
- wobei jeder zeitabhängige Abgabepunktdatensatz zumindest enthält:
   - ein Zustandserfassungszeitdatum und wenigstens eines von
   - einem ersten Zustandsdatum des ersten Abgabepunkts zusammen mit einer ersten Abgabepunktkennung des ersten Abgabepunkts und
   - einem zweiten Zustandsdatum des zweiten Abgabepunkts zusammen mit einer zweiten Abgabepunktkennung des zweiten Abgabepunkts,
- zeit-, zähler- und/ oder anlassgesteuertes Bilden, durch ein Gruppierungsmodul des Hintergrundsystems, von Datensatzgruppen aus den empfangenen Abgabepunkdatensätzen und Endgerätedatensätze,
- Bestimmen, durch ein Bestimmungsmodul des Hintergrundsystems, zumindest einer ersten Zuordnungswahrscheinlichkeit über eine Zuordnung des ersten Abgabepunkts zu dem ersten mobilen Endgerät und einer zweiten Zuordnungswahrscheinlichkeit über eine Zuordnung des zweiten Abgabepunkts zu dem ersten mobilen Endgerät, basierend auf den Daten der gebildeten Datensatzgruppen, und
- Zuordnen, durch ein Zuordnungsmodul des Hintergrundsystems, des ersten Abgabepunkts oder des zweiten Abgabepunkts zu dem ersten mobilen Endgerät, zumindest basierend auf einem Auswerten der ersten Zuordnungswahrscheinlichkeit und der zweiten Zuordnungswahrscheinlichkeit.

Indem im Gegensatz zum Stand der Technik erfindungsgemäß jede Abgabevorrichtung einer Tankstelle mit einem Beacon ausgestattet ist und sowohl zeitabhängige Endgerätedatensätze als auch zeitabhängige Abgabepunktdatensätze erfindungsgemäß ausgewertet werden, werden die Nachteile des Stands der Technik zumindest reduziert und insbesondere in zuverlässiger, hardwarearmer und nutzerfreundlicher Weise das Bestimmen des von dem Nutzer für einen Abgabevorgang verwendeten Abgabepunkts eines Energieabgabesystems ermöglicht. Eine fehleranfällige manuelle Eingabe einer Abgabepunktkennung kann entfallen. Insbesondere kann eine automatische Zuordnung erfolgen zwischen Abgabepunkt bzw. durchgeführtem Abgabevorgang und einem mobilen Endgerät des Nutzers, der diesen Abgabevorgang an diesem Abgabepunkt durchgeführt hat.

Das Verfahren dient zum Betreiben eines Energieabgabesystems, insbesondere zum Zuordnen eines von einem Nutzer durchgeführten Abgabevorgangs zu dem mobilen Endgerät des Nutzers. Vorzugsweise kann das Energieabgabesystem ein Tankstellensystem mit mindestens einer Tankstelle sein, vorzugsweise einer Mehrzahl von geographisch verteilt angeordneten Tankstellen. Das Energieabgabesystem bzw. die mindestens eine Tankstelle ist eingerichtet zum Abgeben von Energie an Fahrzeuge, insbesondere Landfahrzeuge. Die Energie kann in verschiedenen Formen abgegeben werden. Zum Abgeben von Energie umfasst ein Energieabgabesystem, insbesondere eine Tankstelle, zumindest zwei (Energie-) Abgabepunkte, bevorzugt drei oder mehr (Energie-) Abgabepunkte.

Vorzugsweise kann ein Energieabgabesystem als Abgabepunkt eine Abgabebasis mit einer oder vorzugsweise mehreren Abgabevorrichtung/en umfassen. Beispielsweise kann die mindestens eine Abgabebasis eine Zapfsäule sein, die (typischerweise) zwei Abgabepunkte in Form von zwei Zapfpunkten aufweist. Die mindestens eine Abgabevorrichtung eines Abgabepunkts kann eine Zapfpistole sein, die über einen Schlauch mit der Abgabebasis verbunden ist. Alternativ oder zusätzlich kann das Energieabgabesystem als Abgabepunkt eine Ladesäule umfassen. Die mindestens eine Abgabevorrichtung eines Abgabepunkts kann vorzugsweise ein Ladestecker sein, der über ein festangeschlagenes Ladekabel mit der Abgabebasis verbunden ist. Bei Varianten der Erfindung kann als Abgabevorrichtung auch eine Ladesteckdose vorgesehen sein. Vorzugsweise kann ein erfindungsgemäßes Energieabgabesystem eine Mehrzahl von Zapfpistolen und/oder eine Mehrzahl von Ladesteckern umfassen.

Unter einer Abgabevorrichtung ist vorliegend insbesondere eine Schnittstelle des Energieabgabesystems (insbesondere eines Abgabepunkts) zu verstehen, mit der ein Fahrzeug (bzw. ein Energiespeicher des Fahrzeugs) durch das Energieabgabesystem mit Energie versorgt werden kann. Insbesondere kann an mittels einer Abgabevorrichtung (durch einen Nutzer) ein Abgabevorgang ausgelöst werden, um Energie von dem Energieabgabesystem an das Fahrzeug zu übertragen.

Eine Abgabevorrichtung in Form einer Zapfpistole (samt Schlauch) ist insbesondere eingerichtet zum Abgeben von Energie in Form von Kraftstoff, wie flüssigen Kraftstoff (z.B. Diesel, Benzin etc.) oder gasförmigen Kraftstoff (z.B. Erdgas, Wasserstoff). Beispielsweise kann eine Abgabeanordnung (bekannter Bauart) so aufgebaut sein, dass sie an zwei (gegenüberliegenden) Seiten jeweils einen Abstellbereich in Form von Abstellplätzen für zu tankende Fahrzeuge hat. Ferner kann eine derartige Abgabeanordnung beispielsweise an beiden Seiten jeweils einen Abgabepunkt (z.B. einen Zapfpunkt) aufweisen bzw. bilden, jeweils mit mindestens einer Abgabe- bzw. Ausgabevorrichtung. Mit anderen Worten verfügt eine beispielhafte Abgabeanordnung über vorzugsweise zwei Abgabepunkte, nämlich je einen Abgabepunkt für je einen Abstellplatz bzw. Abstellbereich. Bei bevorzugten Varianten kann jeder Abgabepunkt eine Mehrzahl von Abgabevorrichtungen (z.B. zwischen 2 und 6) für insbesondere eine entsprechende Mehrzahl von unterschiedlichen Kraftstoffen aufweisen.

Eine Abgabevorrichtung in Form eines Ladesteckers (samt Ladekabel) ist insbesondere eingerichtet zum Abgeben von Energie in Form von elektrischer Energie. Insbesondere kann ein Stromfluss von einem Ladepunkt über die Abgabevorrichtung zu einem Fahrzeug ermöglicht werden. Eine Abgabeanordnung kann beispielsweise zwei oder mehr Ladepunkte aufweisen. Jeder Ladepunkt kann jeweils einen Abstellbereich in Form von Abstellplätzen für zu ladende Fahrzeuge umfassen, insbesondere in Form von Elektrofahrzeugen. Ein Elektrofahrzeug kann über einen aufladbaren elektrischen Speicher insbesondere in Form einer Traktionsbatterie verfügen. Eine Abgabeanordnung kann einen Ladepunkt mit einer Abgabe- bzw. Ausgabevorrichtung aufweisen, wie eine Ladesteckdose (z.B. gemäß EN 62196 Typ 2 oder dergleichen) und/oder ein festangeschlagenes Ladekabel mit einem Ladestecker (z.B. gemäß EN 62196 Typ 2 oder dergleichen).

Ein Abgabevorgang umfasst vorliegend insbesondere das Abgeben von Energie. Insbesondere erfolgt während eines Abgabevorgangs ein Energiefluss von dem Abgabepunkt zu einem Fahrzeug des Nutzers. Hierzu kann ein Nutzer die Abgabevorrichtung aus einer Ausgangsposition nehmen, zu seinem Fahrzeug tragen, mit einer Aufnahme koppeln und den Energiefluss initiieren. Nach erfolgter Energieübertragung kann die Abgabevorrichtung wieder in die Abgabevorrichtungsaufnahme des Abgabepunkts eingesetzt werden. In bekannter Weise kann die während des Abgabevorgangs übertragene Energiemenge (durch einen entsprechenden Sensor bzw. Energiemengenzähler des Abgabepunkts) erfasst bzw. gezählt werden. Aus dieser Energiemenge kann in ebenfalls bekannter Weise der für die Durchführung des Abgabevorgangs bzw. für den Bezug der gezählten Energiemenge zu entrichtende Betrag berechnet werden.

Bei dem erfindungsgemäßen Energieabgabesystem sind die mindestens zwei Abgabevorrichtungen, insbesondere sämtliche Abgabevorrichtungen einer Tankstelle des Energieabgabesystems, jeweils mit einem Beacon ausgestattet. Beispielsweise kann ein Beacon in der Abgabevorrichtung integriert sein oder an einer Außenseite der Abgabevorrichtung angebracht sein, beispielsweise angeklebt sein.

Ein Beacon meint vorliegend insbesondere einen Sender (vorzugsweise ohne Empfangsfunktion), der vorzugsweise periodisch ein Beaconsignal aussendet. Ein Beacon kann vorzugsweise eine Sendereichweite bis zu 15 m aufweisen, vorzugsweise bis zu 2 bis 6 m. Bevorzugt ist ein Beacon ein Bluetooth-Beacon. Besonders bevorzugt ist vorliegend die Verwendung von BLE (Bluetooth Low Energy)-Beacons. Alternativ oder zusätzlich können andere Arten von Beacons eingesetzt werden, wie z.B. RFID-Beacons und/oder Ultra-Breitband-Beacons.

Insbesondere jedem Beacon des Energieabgabesystem, der an einer Abgabevorrichtung angeordnet ist, kann eine Beaconkennung zugeordnet sein, insbesondere in Form einer systemweit eineindeutigen Beaconkennung. Bei einer Ausführungsform kann die jeweilige Beaconkennung die jeweilige Abgabevorrichtungskennung sein. Bei einer weiteren Ausführungsform kann die mindestens eine Beaconkennung der mindestens einen Abgabevorrichtung eines Abgabepunkts eine Abgabepunktkennung des genannten Abgabepunkts sein. Ein jeweiliges Beaconsignal eines jeweiligen Beacons enthält zumindest die jeweilige Beaconkennung. Mit anderen Worten, ein Beacon (und damit insbesondere die entsprechende Abgabevorrichtung und damit insbesondere der entsprechende Abgabepunkt) ist (eindeutig) identifizierbar anhand der in dem ausgesendeten Beaconsignal enthaltenden Beaconkennung.

Eine Abgabevorrichtung (bzw. der entsprechende Abgabepunkt) ist eingerichtet zum Einnehmen von zumindest zwei unterschiedlichen Zuständen, insbesondere abhängig davon, ob augenblicklich mit der Abgabevorrichtung ein Abgabevorgang ausgeführt wird oder nicht. Das Energieabgabesystem kann (insbesondere in bekannter Weise) Sensoren und mindestens eine Tankstellensteuerung bzw. Forecourtsteuerung umfassen, eingerichtet zum Erfassen des jeweiligen Zustands des jeweiligen Abgabepunkts, insbesondere der jeweiligen Abgabevorrichtung. Insbesondere kann jede Tankstelle des Energieabgabesystems eine lokale Tankstellensteuerung umfassen. Die Tankstellensteuerung kann eingerichtet sein zum Generieren eines jeweiligen Zustandsdatums, insbesondere zum Genieren und wiederholenden Übertragen der Abgabepunktdatensätze, basierend auf den erfassten Zuständen der mindestens zwei Abgabepunkte.

Insbesondere jeder Abgabevorrichtung des Energieabgabesystems kann eine Abgabevorrichtungskennung zugeordnet sein, insbesondere in Form einer systemweit eindeutigen Abgabevorrichtungskennung. Mit anderen Worten, eine Abgabevorrichtung (damit insbesondere der entsprechende Abgabepunkt) ist (eindeutig) anhand der Abgabevorrichtungskennung identifizierbar. Insbesondere jedem Abgabepunkt des Energieabgabesystems kann eine Abgabepunktkennung zugeordnet sein, insbesondere in Form einer systemweit eindeutigen Abgabepunktkennung. Mit anderen Worten, eine Abgabevorrichtung (damit insbesondere der entsprechende Abgabepunkt) ist (eindeutig) anhand der Abgabevorrichtungskennung identifizierbar.

Ferner weist das anmeldungsgemäße Energieabgabesystem ein Hintergrundsystem auf. Das Hintergrundsystem kann lokal an einer Tankstelle angeordnet sein als Bestandteil der zugehörigen Tankstellensteuerung oder es kann geographisch entfernt von der mindestens einen Tankstelle und den mindestens zwei Abgabepunkten angeordnet. Ein Hintergrundsystem (auch als Backendsystem bezeichnet) kann von einer oder mehreren (verteilt angeordneten) Datenverarbeitungsvorrichtung/en gebildet sein, beispielsweise in Form von einem oder mehreren Server/n. Beispielsweise kann das Hintergrundsystem durch ein Cloudsystem gebildet sein. Eine Datenverarbeitungsvorrichtung kann mindestens einen Prozessor umfassen, eingerichtet zum Ausführen eines Computerprogramms bzw. von ausführbaren Softwaremodulen (z.B. Gruppierungsmodul, Bestimmungsmodul, Zuordnungsmodul etc.) des Computerprogramms.

Gemäß dem erfindungsgemäßen Verfahren werden durch das Hintergrundsystem wiederholend (bzw. nahezu kontinuierlich) zeitabhängige Endgerätedatensätze und zeitabhängige Abgabepunktdatensätze empfangen. Beispielsweise kann das Hintergrundsystem mindestens eine Hardwareschnittstelle (beispielsweise zumindest zwei unterschiedliche Hardwareschnittstellen für entsprechend unterschiedliche Übertragungstechnologien) umfassen, eingerichtet zum Empfangen von Signalen/Nachrichten, enthaltend die genannten Datensätze. Ein erstes mit der mindestens einen Hardwareschnittstelle gekoppeltes Empfangsmodul kann eingerichtet sein zum Empfangen der Endgerätedatensätze und zum Bereitstellen der Endgerätedatensätze für eine weitere Verarbeitung. In entsprechender Weise kann ein zweites Empfangsmodul eingerichtet sein zum Empfangen und Bereitstellen der Abgabepunktdatensätze.

Erfindungsgemäß werden zeitabhängige Endgerätedatensätze wiederholend (beispielsweise regelmäßig) empfangen. Endgerätedatensätze werden insbesondere wiederholend von einem mobilen Endgerätübertragen, wenn sich das mobile Endgerät in Reichweite mindestens eines Beacons befindet, also in der Nähe mindestens eines Abgabepunkts. Jeder Endgerätedatensatz enthält zumindest eine Endgerätekennung des den Endgerätedatensatz übertragenden mobilen Endgeräts. Die Endgerätekennung kann eine (systemweit) eindeutige Endgerätekennung sein. Mit anderen Worten, ein mobiles Endgerät ist (eindeutig) anhand der Endgerätekennung identifizierbar.

Beispielhafte und nicht abschließende mobile Endgeräte sind Smartphones, Tablet-Computer, mobile Spielkonsolen, Laptops, Netbooks, Datenbrillen, Smart-Watches und ähnliche Wearables sowie Infotainmentsysteme eines Fahrzeugs. Alternativ kann ein mobiles Endgerät ein dediziertes Energieabgabe-Gerät sein, das ausschließlich für eine Energieabgabeanwendung ausgelegt ist.

Neben der Endgerätekennung enthält ein Endgerätedatensatz insbesondere ein erstes Beacon-Signalstärkedatum eines ersten (durch das erste mobile Endgerät empfangene) Beaconsignals und eine erste Beaconkennnung des ersten Beaconsignals. Die erste Beaconkennung kann in dem Endgerätedatensatz dem erstem Beacon-Signalstärkedatum zugeordnet sein. Der Endgerätedatensatz enthält zumindest ein zweites Beacon-Signalstärkedatum eines zweiten (durch das erste mobile Endgerät empfangene) Beaconsignals und eine zweite Beaconkennnung des zweiten Beaconsignals. Die zweite Beaconkennung kann in dem Endgerätedatensatz dem zweiten Beacon-Signalstärkedatum zugeordnet sein. Beispielsweise kann ein Endgerätedatensatz die jeweilige Beaconkennung und das jeweilige Beacon-Signalstärkedatum von sämtlichen durch das mobile Endgerät (in einem vordefinierten Zeitfenster) empfangenen Beaconsignalen enthalten.

Ein Beacon-Signalstärkedatum zeigt vorliegend insbesondere die Signalstärke an, mit der das entsprechende Beaconsignal durch das mobile Endgerät empfangen wurde. Insbesondere kann das mobile Endgerät den sogenannten Received Signal Strength Indicator (RSSI) eines jeweiligen Beaconsignals bestimmen. Das Beacon-Signalstärkedatum kann insbesondere der RSSI sein oder ein hieraus abgeleitetes Datum. Das Beacon-Signalstärkedatum ist insbesondere ein Indikator für den Abstand bzw. die Entfernung des mobilen Endgeräts zu einer Abgabevorrichtung, deren Beacon das zugehörige Beaconsignal ausgesendet hat.

Der Endgerätedatensatz ist zeitabhängig. Der Endgerätedatensatz enthält ein Empfangszeitdatum (z.B. in Form eines Zeitstempels). Ein Empfangszeitdatum gibt insbesondere den Empfangszeitpunkt bzw. den Empfangszeitraum an, in dem die Beaconsignale empfangen wurden, zu dem die in dem Endgerätedatensatz enthaltenden Beaconkennungen und Beacon-Signalstärkedaten gehören. Dies meint insbesondere, dass das erste Beaconsignal und das zweite Beaconsignal nahezu gleichzeitig bzw. in einem vordefinierten Zeitfenster (z.B. x Millisekunden oder x Sekunden etc.) durch das mobile Endgerät empfangen wurden. In entsprechender Weise können weitere zeitabhängige Endgerätedatensätze insbesondere periodisch gebildet werden.

Es versteht sich, dass ein Endgerätedatensatz datentechnisch durch eine Nachricht/ein Paket oder eine Mehrzahl von Nachrichten/Pakten eines Datenübertragungsprotokolls gebildet sein kann.

Ein Abgabepunktdatensatz enthält vorzugsweise eine Mehrzahl von Abgabepunktkennungen und ein jeweiliges Zustandsdatum des jeweiligen Abgabepunkts, das in dem Abgabepunktdatensatz der entsprechenden Abgabevorrichtungskennung zugeordnet ist. So enthält jeder Abgabepunktdatensatz zumindest eine erste Abgabepunktkennung und eine zweite Abgabepunktkennung sowie ein erstes Zustandsdatum des ersten Abgabepunkts, das der ersten Abgabepunktkennung in dem Abgabepunktdatensatz zugeordnet ist, und ein zweites Zustandsdatum des zweiten Abgabepunkts, das in dem Abgabepunktdatensatz der zweiten Abgabepunktkennung zugeordnet ist. Insbesondere kann ein Abgabepunktdatensatz von sämtlichen Abgabepunkten der mindestens einen Tankstelle die jeweiligen Abgabepunktkennungen und die jeweiligen Zustandsdaten enthalten.

Der Abgabepunktdatensatz ist zeitabhängig. Der Abgabepunktdatensatz enthält ein Zustandserfassungszeitdatum (z.B. in Form eines Zeitstempels). Ein Zustandserfassungszeitdatum gibt insbesondere den Zustandszeitpunkt bzw. den Zustandszeitraum an, in dem die in dem Abgabepunktdatensatz identifizierten Abgabevorrichtung den Zustand entsprechend den in dem Abgabepunktdatensatz enthaltenden Zustandsdatum hatten. Dies meint insbesondere, dass die erste Abgabevorrichtung und die zweite Abgabevorrichtung nahezu gleichzeitig bzw. in einem vordefinierten Zeitraum (z.B. x Millisekunden, x Sekunden etc.) in dem jeweiligen Zustand entsprechend dem jeweiligen Zustandsdatum waren. In entsprechender Weise können weitere zeitabhängige Abgabepunktdatensätze gebildet werden.

Bei einer bevorzugten Ausführungsform kann ein Abgabepunktdatensatz immer (nur) dann (z.B. durch die Tankstellensteuerung) generiert, übertragen und insbesondere durch das Hintergrundsystem empfangen werden, wenn ein Zustandswechsel bei mindestens einem Abgabepunkt detektiert wurde.

Es versteht sich, dass ein Abgabepunktdatensatz datentechnisch durch eine Nachricht/ein Paket oder eine Mehrzahl von Nachrichten/Pakten eines Datenübertragungsprotokolls gebildet sein kann.

Erfindungsgemäß ist insbesondere vorgesehen, dass für ein Auswerten der genannten erhaltenen zeitabhängigen Datensätze diese Datensätze bzw. die darin enthaltenen Daten (zunächst) zeitlich synchronisiert zueinander geordnet bzw. zeitlich synchronisiert gruppiert werden. Es werden insbesondere zumindest zwei zeitabhängige Datensatzgruppen gebildet. Vorzugsweise können drei oder mehr zeitabhängige Datensatzgruppen gebildet werden. Eine Datensatzgruppe wird gebildet, indem ein Abgabepunktdatensatz bzw. die entsprechenden Daten einem Endgerätedatensatz bzw. die entsprechenden Daten einander zugeordnet werden, abhängig von den unterschiedlichen Empfangszeitdaten der empfangenen Endgerätedatensätze und von den unterschiedlichen Zustandserfassungszeitdaten der empfangenen Abgabepunktdatensätze. Dies meint insbesondere, dass ein Endgerätedatensatz dann (und nur dann) einem Abgabepunktdatensatz zugeordnet wird und dadurch eine zeitabhängige Datensatzgruppe bildet, wenn das Empfangszeitdatum im Wesentlichen identisch ist mit dem Zustandserfassungszeitdatum und/oder ein Empfangszeitdatum und ein Zustandserfassungszeitdatum in einem vordefinierten Zeitraum liegen. Mit anderen Worten, die Signalstärkedaten und die Zustandsdaten mit gleicher Zeit werden einander zugeordnet. Es kann also ausgewertet werden, welche Zustände die zumindest zwei Abgabepunkte zu einem bestimmten Zeitpunkt bzw. Zeitbereich hatten und welche Abstände zwischen dem ersten mobilen Endgerät und den zumindest zwei Abgabevorrichtungen der Abgabepunkte (ungefähr) vorlagen zu diesem Zeitpunkt bzw. diesem Zeitbereich. Es versteht sich, dass beispielsweise die gleichen (zeitabhängigen) Zustandsdaten unterschiedlichen (zeitabhängigen) Signalstärkedaten zugeordnet werden können.

Erfindungsgemäß werden zumindest zwei zeitabhängige und vorzugsweise zeitlich aufeinander folgende Datensatzgruppen gebildet, vorzugsweise eine Mehrzahl von zeitabhängigen und insbesondere zeitlich aufeinander folgende Datensatzgruppen. Mit anderen Worten, erfindungsgemäß können vorzugsweise zumindest zwei zeitliche Verläufe ausgewertet werden, nämlich der zeitliche Verlauf der jeweiligen Abstände zwischen dem mindestens einen mobilen Endgerät und den Abgabevorrichtungen sowie der zeitliche Verlauf der jeweiligen Zustände der Abgabepunkte. Hieraus kann in zuverlässiger Weise abgeleitet werden, welchem mobilen Endgerät der mindestens eine Abgabevorgang bzw. der entsprechende Abgabepunkt zuzuordnen ist.

Das Auswerten umfasst erfindungsgemäß das Bestimmen von Zuordnungswahrscheinlichkeiten. Erfindungsgemäß werden zumindest eine erste Zuordnungswahrscheinlichkeit und mindestens eine zweite Zuordnungswahrscheinlichkeit bestimmt, zumindest basierend auf den Daten der ersten und zweiten Datensatzgruppe. Die erste Zuordnungswahrscheinlichkeit gibt insbesondere an, mit welcher Wahrscheinlichkeit das erste mobile Endgerät dem ersten Abgabepunkt zugeordnet werden kann, also insbesondere mit welcher Wahrscheinlichkeit ein Nutzer des ersten mobilen Endgeräts mit dem ersten Abgabepunkt einen Abgabevorgang durchführt und/oder durchgeführt hat. Die zweite Zuordnungswahrscheinlichkeit gibt insbesondere an, mit welcher Wahrscheinlichkeit das erste mobile Endgerät dem zweiten Abgabepunkt zugeordnet werden kann, also insbesondere mit welcher Wahrscheinlichkeit ein Nutzer des ersten mobilen Endgeräts mit dem zweiten Abgabepunkt einen Abgabevorgang durchführt und/oder durchgeführt hat. Bei drei oder mehr Abgabepunkten kann in entsprechender Weise eine dritte oder weitere Zuordnungswahrscheinlichkeit/en bestimmt werden.

Eine Zuordnungswahrscheinlichkeit wird insbesondere bestimmt basierend auf den Beacon-Signalstärkedaten der Abgabevorrichtungen und den (zeitgleich vorliegenden) Zustandsdaten der entsprechenden Abgabepunkten. Beispielsweise ist ein Zustandsdatum, das angibt, dass ein Abgabepunkt nicht für einen Abgabevorgang verwendet wird, ein klares Indiz gegen eine Zuordnung des ersten mobilen Endgeräts zu diesem Abgabepunkt. Eine entsprechende Zuordnungswahrscheinlichkeit kann insbesondere gering ausfallen. Wenn beispielweise das Zustandsdatum angibt, dass ein erster Abgabepunkt für einen Abgabevorgang verwendet wird und zudem die erste Beacon-Signalstärke anzeigt, dass der Abstand zwischen einem mobilen Endgerät und dem ersten Beacon einer Abgabevorrichtung des ersten Abgabepunkts gering ist, insbesondere während der gesamten Zeitdauer, in der das Zustandsdatum angibt, dass der erste Abgabepunkt für einen Abgabevorgang verwendet wird, kann die erste Zuordnungswahrscheinlichkeit eine hohe (insbesondere die höchste) Zuordnungswahrscheinlichkeit sein für eine Zuordnung des ersten mobilen Endgeräts zu dem ersten Abgabepunkt und damit dem entsprechenden Abgabevorgang.

Erfindungsgemäß erfolgt ein Zuordnen eines Abgabepunkts, an dem ein Abgabevorgang durchgeführt wurde, zumindest basierend auf einem Auswerten der ersten Zuordnungswahrscheinlichkeit und der zweiten Zuordnungswahrscheinlichkeit. In einem Fall kann die Zuordnung erfolgen, anhand der höchsten Zuordnungswahrscheinlichkeit der zumindest zwei bestimmten (finalen) Zuordnungswahrscheinlichkeiten eines Abgabevorgangs.

Es versteht sich, dass das erfindungsgemäße Verfahren insbesondere kontinuierlich ausgeführt werden kann. Dies meint insbesondere, dass kontinuierlich zeitabhängige Datensätze empfangen werden, dann gruppiert, anschließend ausgewertet werden und dann eine entsprechende Zuordnung vorgenommen wird. Insbesondere werden in der Praxis während eines Tages eine Vielzahl von Abgabevorgängen durchgeführt, so dass das Verfahren zumindest immer bei einem Empfangen von den genannten zeitabhängigen Datensätzen ausgeführt werden kann.

Gemäß einer Ausführungsform des erfindungsgemäßen Verfahrens kann das Bestimmen zumindest der ersten Zuordnungswahrscheinlichkeit und der zweiten Zuordnungswahrscheinlichkeit ferner umfassen:
- Bestimmen, durch das Bestimmungsmodul des Hintergrundsystems, einer ersten vorläufigen ersten Zuordnungswahrscheinlichkeit und einer ersten vorläufigen zweiten Zuordnungswahrscheinlichkeit, basierend auf den Daten einer ersten Datensatzgruppe,
- Bestimmen, durch das Bestimmungsmodul des Hintergrundsystems, einer zweiten vorläufigen ersten Zuordnungswahrscheinlichkeit und einer zweiten vorläufigen zweiten Zuordnungswahrscheinlichkeit, basierend auf den Daten einer zweiten Datensatzgruppe, und
- Bestimmen der ersten Zuordnungswahrscheinlichkeit und der zweiten Zuordnungswahrscheinlichkeit, basierend auf den bestimmten vorläufigen ersten Zuordnungswahrscheinlichkeiten und den bestimmten vorläufigen zweiten Zuordnungswahrscheinlichkeiten.

Insbesondere kann für jede zeitabhängige Datensatzgruppe vorläufige und insbesondere zeitabhängige Zuordnungswahrscheinlichkeiten bestimmt werden. Insbesondere stellt eine vorläufige Zuordnungswahrscheinlichkeit die zu dem Zeitpunkt bzw. Zeitraum der entsprechenden Datensatzgruppe vorliegende bzw. bestimmte Wahrscheinlichkeit dar. Eine vorläufige erste Zuordnungswahrscheinlichkeit ist insbesondere eine augenblickliche Wahrscheinlichkeit (also die, die zu dem Zeitpunkt bzw. Zeitraum der entsprechenden Datensatzgruppe vorliegt) für eine Zuordnung des ersten Abgabepunkts zu dem ersten mobilen Endgerät während eines noch nicht beendeten Abgabevorgangs. Eine vorläufige zweite Zuordnungswahrscheinlichkeit ist insbesondere die Wahrscheinlichkeit (also die, die zu dem Zeitpunkt bzw. Zeitraum der entsprechenden Datensatzgruppe vorliegt) für eine Zuordnung des zweiten Abgabepunkts zu dem ersten mobilen Endgerät während des noch nicht beendeten Abgabevorgangs.

Vorzugsweise kann die eine erste vorläufige jeweilige Wahrscheinlichkeit den Ausgangspunkt für das Bestimmen der zeitlich nachfolgenden zweiten vorläufigen jeweiligen Wahrscheinlichkeit bilden (usw.). In einfacher Weise können der zeitliche Verlauf der bereitgestellten Beacon-Signalstärkedaten und der zeitliche Verlauf der Zustandsdaten während des Durchführens mindestens eines Abgabevorgangs an der Tankstelle ausgewertet werden. Insbesondere können die (zeitlich) zuletzt bestimmte vorläufige erste Zuordnungswahrscheinlichkeit und die (zeitlich) zuletzt bestimmte zweite Zuordnungswahrscheinlichkeit die erste (finale) Zuordnungswahrscheinlichkeit bzw. die zweite (finale) Zuordnungswahrscheinlichkeit bilden, auf deren Grundlage ein Zuordnen des Abgabepunkts, an dem ein Abgabevorgang durchgeführt wurde, zu einem mobilen Endgerät erfolgt.

Gemäß einer weiteren Ausführungsform des erfindungsgemäßen Verfahrens kann dem ersten mobilen Endgerät durch das Hintergrundsystem der dem ersten mobilen Endgerät zugeordnete Abgabepunkt (bzw. einem mit diesem Abgabepunkt durchgeführten Abgabevorgang) bereitgestellt werden. Das Bereitstellen des zugeordneten Abgabepunkts kann insbesondere derart erfolgen, dass ein unmittelbares Durchführen eines Zahlvorgangs für den zugeordneten Abgabepunkt mittels des mobilen Endgeräts möglich ist. Beispielsweise kann ein entsprechender Datensatz an das mobile Endgerät übertragen werden, enthaltend die verwendete Tankstelle, den verwendeten Abgabepunkt bzw. die Abgabepunktkennung (z.B. Säulennummer), die Energiemenge und/oder den zu entrichtenden Betrag über eine Kommunikationsverbindung. Der Datensatz kann Instruktionen umfassen, die, wenn sie durch einen Prozessor des ersten mobilen Endgeräts (z.B. unter Steuerung einer Energieabgabeanwendung des mobilen Endgeräts) ausgeführt werden, bewirken, dass zumindest der zugeordnete Abgabepunkt vorzugsweise zusammen mit dem Betrag, der für die während des Abgabevorgangs bezogene Energie zu entrichten ist, auf einer Anzeige des ersten mobilen Endgeräts angezeigt werden. Dann kann der Nutzer über eine Nutzerschnittstelle des ersten mobilen Endgeräts die Bezahlung des Betrags (in bekannter Weise) veranlassen. Der Nutzer kann mit seinem Fahrzeug die Tankstelle nahezu unmittelbar nach dem Abgabevorgang verlassen. Der Fahrzeugdurchsatz kann in dem erfindungsgemäßen Energieabgabesystem erhöht werden.

Darüber hinaus können gemäß einer weiteren Ausführungsform des erfindungsgemäßen Verfahrens beim gleichzeitigen Vorhandensein zumindest eines zweiten Mobilen Endgeräts für jedes der zumindest zwei vorhandenen mobilen Endgeräte jeweils zumindest eine erste Zuordnungswahrscheinlichkeit und eine zweite Zuordnungswahrscheinlichkeit bestimmt werden, wobei das Zuordnen des ersten Abgabepunkts oder des zweiten Abgabepunkts zu dem ersten mobilen Endgerät oder dem zweiten mobilen Endgerät zumindest auf einem Auswerten der bestimmten ersten Zuordnungswahrscheinlichkeiten und der bestimmten zweiten Zuordnungswahrscheinlichkeiten basieren kann. Insbesondere erfolgt dann eine Zuordnung des ersten Abgabepunkts zum ersten mobilen Endgerät, wenn für das erste mobile Endgerät die erste Zuordnungswahrscheinlichkeit größer ist als die mindestens eine weitere Zuordnungswahrscheinlichkeit. Das zweite mobile Endgerät kann dann dem zweiten Abgabepunkt (sofern ein zweiter Abgabevorgang überhaupt durchgeführt wurde) zugeordnet werden, wenn für das zweite mobile Endgerät die zweite Zuordnungswahrscheinlichkeit größer ist als die mindestens eine weitere Zuordnungswahrscheinlichkeit. Ein erstes mobiles Endgerät der Mehrzahl von mobilen Endgeräten kann einem Abgabepunkt (bzw. einem mit diesem Abgabepunkt durchgeführten Abgabevorgang) der Mehrzahl von Abgabepunkten zugeordnet werden, zumindest basierend auf einem Auswerten der jeweiligen ersten Zuordnungswahrscheinlichkeiten und der jeweiligen zweiten Zuordnungswahrscheinlichkeiten.

In entsprechender Weise kann mindestens ein weiterer Abgabepunkt der Mehrzahl von Abgabepunkten einem weiteren mobilen Endgerät der Mehrzahl von mobilen Endgeräten zugeordnet werden, zumindest basierend auf einem Auswerten der jeweiligen ersten Zuordnungswahrscheinlichkeiten und der jeweiligen zweiten Zuordnungswahrscheinlichkeiten. Insbesondere kann jedem Abgabevorgang (genau) ein mobiles Endgerät zugeordnet werden. Es versteht sich, dass sich auf einer Tankstelle mehr mobile Endgeräte befinden können, als Abgabevorgänge durchgeführt werden bzw. wurden, und/oder dass weniger mobile Endgeräte auf einer Tankstelle vorhanden sein können, als Abgabevorgänge durchgeführt werden bzw. wurden (in diesem Fall kann festgestellt werden, dass mindestens ein Abgabevorgang keinem mobilen Endgerät zuordenbar ist und voraussichtlich in bekannter Weise in einem Tankstellenshop bezahlt werden wird). Das erfindungsgemäße Verfahren ermöglicht insbesondere aufgrund der beschriebenen Auswertung auch in diesen Fällen eine zuverlässige Zuordnung.

Insbesondere können an einer Tankstelle mit einer Vielzahl an Abgabenpunkten mit jeweils bis zu sechs Abgabevorrichtungen eine Mehrzahl von Abgabevorgängen zumindest teilweise parallel durchgeführt werden. Das erfindungsgemäße Verfahren ermöglicht es auch in diesen Situationen, dass jedem (beendeten) Abgabevorgang ein mobiles Endgerät zugeordnet werden kann.

Gemäß einer bevorzugten Ausführungsform des erfindungsgemäßen Verfahrens kann das Auswerten der ersten Zuordnungswahrscheinlichkeit und der zweiten Zuordnungswahrscheinlichkeit ein Bestimmen der höchsten Zuordnungswahrscheinlichkeit aus der ersten Zuordnungswahrscheinlichkeit und der zweiten Zuordnungswahrscheinlichkeit umfassen. Wie bereits beschrieben wurde, kann vorteilhafterweise die höchste Zuordnungswahrscheinlichkeit der zumindest zwei Zuordnungswahrscheinlichkeiten bestimmt werden. Eine Zuordnung eines Abgabevorgangs bzw. eines Abgabepunkts zu einem ersten mobilen Endgerät erfolgt insbesondere auf der bestimmten höchsten Zuordnungswahrscheinlichkeit über eine Zuordnung zwischen einem Abgabepunkt und einem mobilen Endgerät.

Gemäß einer besonders bevorzugten Ausführungsform des erfindungsgemäßen Verfahrens kann das Auswerten zumindest der ersten Zuordnungswahrscheinlichkeit und der zweiten Zuordnungswahrscheinlichkeit ferner umfassen:
- Bestimmen einer höchsten ersten vorläufigen Zuordnungswahrscheinlichkeit aus der ersten vorläufigen ersten Zuordnungswahrscheinlichkeit und der ersten vorläufigen zweiten Zuordnungswahrscheinlichkeit,
- Bestimmen einer höchsten zweiten vorläufigen Zuordnungswahrscheinlichkeit aus der zweiten vorläufigen ersten Zuordnungswahrscheinlichkeit und der zweiten vorläufigen zweiten Zuordnungswahrscheinlichkeit, und
- bei einem Feststellen, dass bei der bestimmten höchsten ersten vorläufigen Zuordnungswahrscheinlichkeit und bei der bestimmten höchsten zweiten vorläufigen Zuordnungswahrscheinlichkeit jeweils derselbe Abgabepunkt dem ersten mobilen Endgerät zugordnet ist, Erhöhen der bestimmten höchsten Zuordnungswahrscheinlichkeit insbesondere um einen vordefinierten Erhöhungsfaktor.

Um die Zuverlässigkeit bei der Zuordnung zwischen mobilem Endgerät und Abgabepunkt bzw. durchgeführtem Abgabevorgang noch weiter zu verbessern, kann der zeitliche Verlauf der bestimmten zeitabhängigen Zuordnungswahrscheinlichkeiten ausgewertet werden. Insbesondere dann, wenn die gleiche vorläufige Zuordnungswahrscheinlichkeit der zumindest jeweils zwei bestimmten vorläufigen Zuordnungswahrscheinlichkeiten die höchste Zuordnungswahrscheinlichkeit über der Zeit bleibt (also zumindest für die erste und die zweite Datensatzgruppe), kann dies als ein zusätzliches Indiz gewertet werden, dass die zugehörige vorläufige Zuordnung zwischen einem Abgabepunkt und einem mobilen Endgerät korrekt ist. Vorzugsweise kann ein vordefinierter Erhöhungsfaktor vorgesehen sein, mit dem die höchste Zuordnungswahrscheinlichkeit erhöht werden kann, um dieses weitere Indiz zu berücksichtigen. Die Zuverlässigkeit kann noch weiter verbessert werden. Mit anderen Worten: wenn ein mobiles Endgerät auf Basis der jeweils ermittelten vorläufigen Zuordnungswahrscheinlichkeiten wiederholt als dasjenige ermittelt wird, das zu einem bestimmten, augenblicklich benutzten Abgabepunkt gehört, dann wird dieser wiederholt auftretenden höchsten Zuordnungswahrscheinlichkeit ein "Vertrauenszuschlag" zugerechnet. Also: Je öfter ein Endgerät als zugehörig zu einem Abgabepunkt bestimmt wird, desto vertrauenswürdiger wird diese Zuordnung.

Wie bereits beschrieben wurde, kann eine Tankstelle des Energieabgabesystems mehr als zwei Abgabepunkte (beispielweise zwischen 4 und 12) und/oder mehr als zwei Abgabevorrichtungen (beispielsweise zwischen 4 und 50) aufweisen. Gemäß einer weiteren Ausführungsform des erfindungsgemäßen Verfahrens kann die Tankstelle mindestens einen dritten Abgabepunkt umfassen, umfassend mindestens eine dritte Abgabevorrichtung mit einem dritten Beacon, wobei jeder zeitabhängige Endgerätedatensatz ferner zumindest eine dritte Beaconkennung des dritten Beacons und ein drittes Beacon-Signalstärkedatum eines empfangenen dritten Beaconsignals des dritten Beacons enthalten kann und wobei jeder zeitabhängige Abgabepunktdatensatz ferner zumindest eine dritte Abgabepunktkennung des dritten Abgabepunkts und ein drittes Zustandsdatum des dritten Abgabepunkts enthalten kann. Das Verfahren kann ferner umfassen:
- Bestimmen, durch das Bestimmungsmodul, einer dritten Zuordnungswahrscheinlichkeit über eine Zuordnung des dritten Abgabepunkts zu dem ersten mobilen Endgerät, basierend auf den Daten der ersten Datensatzgruppe und den Daten der der zweiten Datensatzgruppe, und
- Zuordnen, durch das Zuordnungsmodul, des ersten Abgabepunkts oder des zweiten Abgabepunkts oder des dritten Abgabepunkts zu dem ersten mobilen Endgerät, zumindest basierend auf einem Auswerten der ersten Zuordnungswahrscheinlichkeit, der zweiten Zuordnungswahrscheinlichkeit und der dritten Zuordnungswahrscheinlichkeit.

Gemäß einer weiteren Ausführungsform des erfindungsgemäßen Verfahrens kann das Verfahren ferner umfassen:
- Bestimmen, durch das Bestimmungsmodul, einer ersten vorläufigen ersten Zuordnungswahrscheinlichkeit, einer ersten vorläufigen zweiten Zuordnungswahrscheinlichkeit und einer ersten vorläufigen dritten Zuordnungswahrscheinlichkeit, basierend auf den Daten der ersten Datensatzgruppe,
- Bestimmen, durch das Bestimmungsmodul, einer höchsten ersten vorläufigen Zuordnungswahrscheinlichkeit und einer zweithöchsten ersten vorläufigen Zuordnungswahrscheinlichkeit aus der bestimmten ersten vorläufigen ersten Zuordnungswahrscheinlichkeit, der bestimmten ersten vorläufigen zweiten Zuordnungswahrscheinlichkeit und der bestimmten ersten vorläufigen dritten Zuordnungswahrscheinlichkeit,
- wobei die bestimmte höchste Zuordnungswahrscheinlichkeit erhöht wird, insbesondere um einen vordefinierten Erhöhungsfaktor, basierend auf einem festgestellten Abstand zwischen der höchsten ersten vorläufigen Zuordnungswahrscheinlichkeit und der zweithöchsten ersten vorläufigen Zuordnungswahrscheinlichkeit und einem vordefinierten Abstandskriterium, und/oder
- Bestimmen, durch das Bestimmungsmodul, einer zweiten vorläufigen ersten Zuordnungswahrscheinlichkeit, einer zweiten vorläufigen zweiten Zuordnungswahrscheinlichkeit und einer zweiten vorläufigen dritten Zuordnungswahrscheinlichkeit, basierend auf den Daten der zweiten Datensatzgruppe,
- Bestimmen, durch das Bestimmungsmodul, einer höchsten zweiten vorläufigen Zuordnungswahrscheinlichkeit und einer zweithöchsten zweiten vorläufigen Zuordnungswahrscheinlichkeit aus der bestimmten zweiten vorläufigen ersten Zuordnungswahrscheinlichkeit, der bestimmten zweiten vorläufigen zweiten Zuordnungswahrscheinlichkeit und der bestimmten zweiten vorläufigen dritten Zuordnungswahrscheinlichkeit,
- wobei die bestimmte höchste Zuordnungswahrscheinlichkeit erhöht wird, insbesondere um einen vordefinierten Erhöhungsfaktor, basierend auf einem festgestellten Abstand zwischen der höchsten zweiten vorläufigen Zuordnungswahrscheinlichkeit und der zweithöchsten zweiten vorläufigen Zuordnungswahrscheinlichkeit und einem vordefinierten Abstandskriterium.

Eine vorläufige dritte Zuordnungswahrscheinlichkeit ist insbesondere die Wahrscheinlichkeit (also die, die zu dem Zeitpunkt bzw. Zeitraum der entsprechenden Datensatzgruppe vorliegt) für eine Zuordnung des zweiten Abgabepunkts zu dem ersten mobilen Endgerät während des noch nicht beendeten Abgabevorgangs. Es sei angemerkt, dass bei den vorläufigen Wahrscheinlichkeiten die Ausdrücke "erste", "zweite" und "dritte" eine zeitliche Reihenfolge angeben.

Vorzugsweise können entsprechende vorläufige Zuordnungswahrscheinlichkeiten zwischen jedem mobilen Endgerät und jedem Abgabepunkt, von dem eine Beaconkennung in einem empfangenen Endgerätedatensatz enthalten war, bestimmt werden. Insbesondere bei zumindest drei ersten und/oder drei zweiten (und/oder weiteren) vorläufigen Zuordnungswahrscheinlichkeiten kann zusätzlich zu einer jeweiligen höchsten ersten vorläufigen und/oder höchsten zweiten (und/oder weiteren) vorläufigen Zuordnungswahrscheinlichkeit zumindest eine zweithöchste erste vorläufige Zuordnungswahrscheinlichkeit und/oder eine zweithöchste zweite (und/oder weiteren) vorläufige Zuordnungswahrscheinlichkeit bestimmt werden. Beispielsweise bei den ersten vorläufigen Zuordnungswahrscheinlichkeiten kann, durch das Bestimmungsmodul, der Abstand zwischen der ersten höchsten ersten vorläufigen Zuordnungswahrscheinlichkeit der zumindest drei ersten vorläufigen Zuordnungswahrscheinlichkeiten und der zweithöchsten ersten vorläufigen Zuordnungswahrscheinlichkeit der zumindest drei ersten vorläufigen Zuordnungswahrscheinlichkeiten bestimmt werden. Es ist insbesondere erkannt worden, dass bei einem ausreichend großen Abstand (definiert durch das Abstandskriterium) zwischen der genannten höchsten und zweithöchsten vorläufigen Zuordnungswahrscheinlichkeit dies als ein zusätzliches Indiz gewertet werden kann, dass die zugehörige Zuordnung der höchsten vorläufigen Zuordnungswahrscheinlichkeit korrekt ist. Vorzugsweise kann ein (weiterer) vordefinierter Erhöhungsfaktor vorgesehen sein, mit dem die höchste Zuordnungswahrscheinlichkeit erhöht werden kann, wenn festgestellt wird, dass ein Mindestabstand (definiert durch das Abstandskriterium) zwischen der genannten höchsten und zweithöchsten vorläufigen Zuordnungswahrscheinlichkeit erreicht bzw. überschritten wird. In entsprechender Weise kann bei den zweiten, dritten etc. vorläufigen Zuordnungswahrscheinlichkeiten verfahren werden. Mit anderen Worten: wenn die höchste ermittelte vorläufige Zuordnungswahrscheinlichkeiten eines Abgabevorgangs (also eines Beacons einer benutzten Abgabevorrichtung) zu einem ersten mobilen Endgerät signifikant höher ist die zweithöchste ermittelte vorläufige Zuordnungswahrscheinlichkeiten zu einem zweiten Endgerät, dann wird dieser höchsten Zuordnung ein "Vertrauenszuschlag" hinzugefügt. Die Zuverlässigkeit kann noch weiter verbessert werden.

Gemäß einer weiteren Ausführungsform des erfindungsgemäßen Verfahrens kann das Verfahren ferner umfassen:
- wiederholendes (und/oder kontinuierliches) Empfangen, durch das erste mobile Endgerät, des ersten (insbesondere periodisch ausgesendeten) Beaconsignals und des zweiten (insbesondere periodisch ausgesendeten) Beaconsignals, und
- Bestimmen, durch das erste mobile Endgerät, für jedes der empfangenen ersten Beaconsignale eines jeweiligen ersten Beacon-Signalstärkedatums und für jedes der empfangenen zweiten Beaconsignale eines jeweiligen zweiten Beacon-Signalstärkedatums.

Wie beschrieben wurde, kann jeder Beacon vorzugsweise periodisch ein Beaconsignal, enthaltend die jeweilige Beaconkennung, aussenden. Das Beaconsignal kann vorzugsweise ein Advertisingsignal sein. Unter einem (Nahfeld-)Advertising-Signal ist vorliegend insbesondere ein (Nahfeld-)Signal zu verstehen, das von einem Sender, also einem Beacon, ausgesendet werden kann, und das von einem mobilen Endgerät empfangbar und insbesondere auswertbar ist, ohne dass eine (dauerhafte) Kopplung zwischen den genannten Elementen erforderlich ist. Insbesondere kann ein Advertising-Signal vorzugsweise in regelmäßigen Zeitabständen ausgesendet werden auf mindestens einem von beispielsweise einer Mehrzahl von Advertising-Kanälen einer bestimmten Übertragungstechnologie.

Im Stand der Technik wird ein Advertising-Signal eingesetzt, um eine dauerhafte Kommunikationsverbindung zwischen zwei Geräten herzustellen. Insbesondere wird ein Advertising-Signal für den ersten Kontakt zwischen den Geräten verwendet, insbesondere um die Anwesenheit und die grundsätzliche Bereitschaft eines Geräts für eine Kopplung mit einem weiteren (evtl. in Reichweite befindlichem) Gerät anzuzeigen. Nach Herstellung des ersten Kontakts wird anschließend auf einen anderen Kanal mit einer höheren Datenrate gewechselt, wenn eine dauerhafte Kommunikationsverbindung gewünscht ist. Die Daten werden dann nicht über Advertising-Signale ausgetauscht.

Es ist erkannt worden, dass ein Advertising-Signal vorteilhaft zur Signalisierung zumindest der Beaconkennung und zum Bestimmen des Abstands zur entsprechenden Abgabevorrichtung verwendet werden kann, da (sofern die entsprechende Nahfeldschnittstelle des mobilen Endgeräts aktiviert ist) ein solches Signal stets von einem mobilen Endgerät empfangbar und auswertbar ist. Vorzugsweise kann das Advertising-Signal ein Bluetooth-Advertising-Signal sein.

Beispielweise kann für jedes empfangene Beaconsignal der jeweilige RSSI als Beacon-Signalstärkedatum durch das jeweils empfangende mobile Endgerät bestimmt werden. In einer Ausführungsform kann das mobile Endgerät jedes bestimmte Beacon-Signalstärkedatum und die jeweils zugehörige Beaconkennung einem Endgerätedatensatz hinzufügen. Dann können jedes Beacon-Signalstärkedatum und die jeweils zugehörige Beaconkennung ausgewertet werden. Ein besonders genaues Bestimmen von Zuordnungswahrscheinlichkeiten ist möglich.

Um insbesondere die zu übertragene Datenmenge oder zumindest die auszuwertende Datenmenge zu reduzieren (und hierbei die Genauigkeit des Bestimmens von Zuordnungswahrscheinlichkeiten nur unwesentlich zu reduzieren), wird gemäß einer Ausführungsform des erfindungsgemäßen Verfahrens vorgeschlagen, zumindest diejenigen Daten zu ignorieren, die (in offensichtlicher Weise) keinen Beitrag liefern können für eine Zuordnung zwischen einem Abgabepunkt und einem mobilen Endgerät. Besonders bevorzugt kann das Bestimmen eines Signalstärkedatums ein Bestimmen einer Signalstärke (z.B. RSSI) des empfangenen Beaconsignals umfassen. Das Verfahren kann ferner umfassen:
- Bestimmen, durch das erste mobile Endgerät, ob eine bestimmte Signalstärke des empfangenen Beaconsignals einen vordefinierten Mindestsignalstärkewert überschreitet, und
- Hinzufügen der Beaconkennung des empfangenen Beaconsignals zusammen mit dem für dieses Beaconsignal bestimmten Beacon-Signalstärkedatum zu dem zeitabhängigen Endgerätedatensatz nur dann, wenn die bestimmte Signalstärke des Beaconsignals den vordefinierten Mindestsignalstärkewert überschreitet,
   und/oder
- Bestimmen, durch das erste mobile Endgerät, einer Anzahl an empfangenen ersten Beaconsignalen anhand der Beaconkennung während eines vordefinierten Zeitfensters, und
- Hinzufügen der ersten Beaconkennung zusammen mit dem für dieses Beaconsignal bestimmten Beacon-Signalstärkedatum zu dem zeitabhängigen Endgerätedatensatz nur dann, wenn die bestimmte Anzahl an empfangenen Beaconsignalen eine vordefinierte Mindestanzahl überschreitet,
   und/oder
- Bestimmen, durch das erste mobile Endgerät, ob eine bestimmte Signalstärke eines Beaconsignals einer Mehrzahl von empfangenen unterschiedlichen Beaconsignalen unterschiedlicher Beacons unter den N-höchsten Signalstärken der empfangenen unterschiedlichen Beaconsignalen ist, wobei N vordefiniert ist, und
- Hinzufügen der Beaconkennung des Beaconsignals zusammen mit dem für dieses Beaconsignal bestimmten Beacon-Signalstärkedatum zu dem zeitabhängigen Endgerätedatensatz nur dann, wenn die bestimmte Signalstärke des Beaconsignals unter den N-höchsten Signalstärken der empfangenen unterschiedlichen Beaconsignalen ist.

Insbesondere ist erkannt worden, dass bei einem Beaconsignal, das eine vordefinierte Mindestsignalstärke nicht erreicht, davon ausgegangen werden kann, dass ein mobiles Endgerät, das dieses Beaconsignal empfängt, so weit von der Abgabevorrichtung des aussendenden Beacons und damit von dem entsprechenden Abgabepunkt entfernt ist, dass eine Zuordnung zu diesem Abgabepunkt so unwahrscheinlich ist, dass zumindest auf eine Auswertung verzichtet werden kann. Alternativ oder zusätzlich ist festgestellt worden, dass eine Zuordnung eines Abgabepunkt zu einem mobilen Endgerät zumindest dann so unwahrscheinlich ist, dass zumindest auf eine Auswertung verzichtet werden kann, wenn ein Beaconsignal eines ersten Beacons, das vorzugsweise periodisch ausgesendet wird, nicht in der erwarteten Häufigkeit (definiert durch die Mindestanzahl) durch das mobile Endgerät empfangen wird. Auch dann kann davon ausgegangen werden, dass der Abstand zu dem entsprechenden Abgabepunkt des aussendenden Beacons zu hoch ist, als dass eine Zuordnung in Betracht kommen würde. Alternativ oder zusätzlich ist festgestellt worden, dass eine Zuordnung eines Abgabepunkts zu einem mobilen Endgerät zumindest dann so unwahrscheinlich ist, dass zumindest auf eine Auswertung verzichtet werden kann, wenn die bestimmte Signalstärke des Beaconsignals nicht unter den N-höchsten Signalstärken der empfangenen unterschiedlichen Beaconsignalen ist. Insbesondere kann auch in diesem Fall davon ausgegangen werden, dass der Abstand zu dem entsprechenden Abgabepunkt des aussendenden Beacons zu hoch ist, als dass eine Zuordnung in Betracht kommen würde.

Bei Varianten der Erfindung ist es auch denkbar, dass ein Endgerätedatensatz Beacon-Signalstärkedaten von sämtlichen empfangenen Beaconsignalen enthält, jedoch ein Auswerten der darin enthaltenden Daten nur dann erfolgt, wenn die bestimmte Signalstärke eines Beaconsignals den vordefinierten Mindestsignalstärkewert übersteigt und/oder wenn die bestimmte Anzahl an (wiederholend) empfangenen Beaconsignalen eine vordefinierte Mindestanzahl überschreitet und/oder wenn die bestimmte Signalstärke des Beaconsignals unter den N-höchsten Signalstärken der empfangenen unterschiedlichen Beaconsignalen ist. Insbesondere kann durch ein Vorprüfungsmodul des Hintergrundsystems ein entsprechender Vorprüfungsschritt ausgeführt werden.

Um die auszuwertenden Datenmenge noch weiter zu reduzieren, kann gemäß einer weiteren Ausführungsform des erfindungsgemäßen Verfahrens das Bestimmen der Signalstärke eines Beaconsignals umfassen: ein Glätten einer Mehrzahl der bestimmten Signalstärken der periodisch empfangenen Beaconsignale eines einzelnen Beacons während eines vordefinierten Zeitfensters und/oder ein Mitteln einer Mehrzahl der bestimmten Signalstärken der periodisch empfangenen Beaconsignale eines (einzelnen) Beacons während eines vordefinierten Zeitfensters. Ein entsprechendes Empfangszeitdatum kann insbesondere auf dem vordefinierten Zeitfenster basieren. Es ist insbesondere denkbar, mehrere empfangene Beaconsignale zu einem Endgerätedatensatz/Event zu aggregieren, um zum Beispiel Schwankungen der Signalstärken eines periodisch empfangenen Beaconsignals zu glätten und/oder Daten über Beacons zu aggregieren. Das Aggregieren von empfangenen Beaconsignalen kann in dem mobilen Endgerät erfolgen und/oder in dem Hintergrundsystem.

Insbesondere kann das Aggregieren von Beaconsignalen eines (einzelnen) Beacons umfassen, dass die Signalstärken dieser empfangenen Beaconsignale ausgemittelt werden und/oder solche Beaconsignale ausgeblendet bzw. ignoriert werden, von denen das mobile Endgerät weniger als eine Mindestanzahl oder weniger als eine Mindestsignalstärke empfangen konnte. Ein Endgerätedatensatz kann insbesondere ein Signal-Event abbilden und im Wesentlichen Informationen über eine Entfernung eines mobilen Endgeräts von denjenigen Beacons enthalten, deren Signale das mobile Endgerät mit einer vergleichsweise hohen Signalstärke empfangen konnte. Die Information über eine Entfernung kann dabei insbesondere durch einen Signal-Score ausgedrückt werden, d.h. einen ausgemittelten oder geglätteten Wert der Signalstärke, mit der das mobile Endgerät mehrere Signale von jeweils einem Beacon empfangen konnte, wie noch beschrieben werden wird.

Gemäß einer weiteren bevorzugten Ausführungsform des erfindungsgemäßen Verfahrens kann das Auswerten der ersten Datensatzgruppe und der zweiten Datensatzgruppe ferner umfassen:
- Bestimmen zumindest eines ersten zeitabhängigen Entfernungsdatums über die Entfernung des mobilen Endgeräts zu der ersten Abgabevorrichtung, basierend auf dem ersten Beacon-Signalstärkedatum, und eines zweiten zeitabhängigen Entfernungsdatums über die Entfernung des mobilen Endgeräts zu der zweiten Abgabevorrichtung, basierend auf dem zweiten Beacon-Signalstärkedatum.

Wie bereits beschrieben wurde, kann aus einem Beacon-Signalstärkedatum, insbesondere in Form eines RSSI, zum Empfangszeitpunkt die Entfernung bestimmt werden zwischen dem empfangenden mobilen Endgerät und dem aussendenden Beacon, und damit zur Abgabevorrichtung, umfassend diesen Beacon. Die Entfernung kann insbesondere in Form eines Entfernungsdatums bestimmt werden. Beispielsweise kann das Entfernungsdatum eine Entfernungsangabe in Metern sein. Vorzugsweise kann das Entfernungsdatum ein Signalstärkefaktor bzw. ein Signal-Score sein, der zwischen einem minimalen Wert (z.B. 0 bei großer Entfernung) und einem maximalen Wert (z.B. 100 bei geringer Entfernung) liegen kann, abhängig von dem bestimmten RSSI. Die genannten minimalen und maximalen Werte eines Signal-Scores sind dabei beispielhaft gewählte Größen; wichtig ist, dass die durch einen Empfänger empfangene Signalstärke physikalisch im Quadrat der Entfernung zum Sender abnimmt, und dass der Signal-Score auf der physikalischen Signalstärke basiert, wie oben erläutert.

Vorzugsweise kann das Bestimmen des ersten zeitabhängigen Entfernungsdatums und des zweiten zeitabhängigen Entfernungsdatums ein Bestimmen desjenigen Beacons aus dem ersten Beacon und dem zweiten Beacon (und ggf. weiteren Beacons) umfassen, der am nächsten zu dem ersten mobilen Endgerät ist. Wie beschrieben wurde, ist insbesondere der jeweilige Abstand zwischen mobilem Endgerät und Beacon ein wesentliches Kriterium für das Bestimmen der genannten Wahrscheinlichkeiten und damit insbesondere für eine Zuordnung zwischen mobilem Endgerät und einem Abgabepunkt. Indem derjenige Beacon aus den zumindest zwei Beacons bestimmt wird, der am nächsten zu dem mobilen Endgerät positioniert ist, kann die Zuverlässigkeit bei der Zuordnung noch weiter verbessert werden.

Insbesondere für eine ordnungsgemäße Zuordnung können die jeweiligen Kennungen und deren Zuordnungen zueinander dem Hintergrundsystem bekannt sein. Gemäß einer bevorzugten Ausführungsform des erfindungsgemäßen Verfahrens kann das Verfahren ferner umfassen:
- Bereitstellen einer Kennungsdatenbank, enthaltend zumindest eine erste Kennungszuordnung, bei der die erste Beaconkennung der ersten Abgabepunktkennung zugeordnet ist, und eine zweite Kennungszuordnung, bei der die zweite Beaconkennung der zweiten Abgabepunktkennung zugeordnet ist,
- wobei das Auswerten der ersten Datensatzgruppe und der zweiten Datensatzgruppe ferner basiert auf den in der Kennungsdatenbank enthaltenden Kennungszuordnungen,
   und/oder
- wobei das Zuordnen des Abgabepunkts zu dem ersten mobilen Endgerät ferner basiert auf den in der Kennungsdatenbank enthaltenden Kennungszuordnungen.

Insbesondere kann das Hintergrundsystem einen Datenspeicher umfassen, eingerichtet zum Speichern der Kennungsdatenbank. Beispielsweise kann die Kennungsdatenbank eine Zuordnungstabelle umfassen, in der die genannten Kennungszuordnungen, insbesondere sämtlichen Kennungszuordnungen des Energieabgabesystems, gespeichert sind. Insbesondere kann sich aus der Kennungsdatenbank unmittelbar ergeben, welche Abgabevorrichtungen zu welchem Abgabepunkt gehören und wie die entsprechenden Beaconkennungen, Abgabepunktkennungen und/oder Abgabevorrichtungskennungen lauten. Wenn beispielsweise ein Endgerätedatensatz ein erstes Beacon-Signalstärkedatum mit einer ersten Beaconkennung enthält und ein Abgabepunktdatensatz ein erstes Zustandsdatum mit einer ersten Abgabepunktkennung enthält, kann anhand der Kennungsdatenbank festgestellt werden, dass die erste Abgabevorrichtung den ersten Beacon umfasst und insbesondere zu dem ersten Abgabepunkt gehört. Dann können erstes Zustandsdatum und erstes Beacon-Signalstärkedatum zusammen ausgewertet werden, um eine erste Zuordnungswahrscheinlichkeit zwischen erstem Abgabepunkt und dem ersten mobilen Endgerät zu bestimmen.

Wie bereits beschrieben wurde, kann ein Abgabepunkt zumindest zwei unterschiedliche Zustände einnehmen. Gemäß einer weiteren Ausführungsform des erfindungsgemäßen Verfahrens kann ein (erster oder zweiter oder dritter etc.) Abgabepunkt zumindest drei unterschiedliche Zustände mit entsprechend unterschiedlichen Zustandsdaten (bzw. Zustandsdatumswerten) einnehmen. Bei einem Betriebsbereitzustandsdatum kann die mindestens eine Abgabevorrichtung des Abgabepunkts für ein Durchführen eines Abgabevorgangs in einem verfügbaren Zustand ("betriebsbereit") sein. In diesem ersten Zustand kann die mindestens eine Abgabevorrichtung des Ausgabepunkts in einer Ausgangsposition angeordnet sein. Bei einer Zapfpistole meint die Ausgangsposition insbesondere, dass die Zapfpistole (in einer Zapfpistolenaufnahme des Abgabepunkts) eingehängt ist. Bei einem Ladestecker meint die Ausgangsposition insbesondere, dass der Ladestecker (in einer Ladesteckeraufnahme des Abgabepunkts) eingehängt ist. Mit anderen Worten, bei dem Betriebsbereitzustandsdatum wird die der Abgabepunkt nicht für die Durchführung eines Abgabevorgangs verwendet und wurde auch nicht für die Durchführung eines (noch nicht bezahlten) Abgabevorgangs verwendet.

Bei einem Betriebszustandsdatum kann der Abgabepunkt, insbesondere aufgrund eines (augenblicklichen) Durchführens eines Abgabevorgangs, in einem Betriebszustand sein. In diesem Zustand kann eine Abgabevorrichtung des Abgabepunkts in einer Betriebsposition angeordnet sein, die sich von der Ausgangsposition insbesondere unterscheidet. Bei einer Zapfpistole meint die Betriebsposition insbesondere, dass die Zapfpistole nicht (in einer Zapfpistolenaufnahme des Abgabepunkts) eingehängt ist. Beispielsweise kann die Zapfpistole von einem Nutzer gehalten und/oder in einer Tanköffnung des Fahrzeugs eingesetzt sein. Insbesondere kann sich die Zapfpistole entfernt von der Zapfpistolenaufnahme des Abgabepunkts befinden. Bei einem Ladestecker meint die Betriebsposition insbesondere, dass der Ladestecker nicht (in einer Ladesteckeraufnahme des Abgabepunkts) eingehängt ist. Beispielsweise kann der Ladestecker von einem Nutzer gehalten und/oder in einer Ladesteckdose des Fahrzeugs eingesetzt sein. Insbesondere kann sich der Ladestecker entfernt von der Ladesteckeraufnahme des Abgabepunkts befinden. Mit anderen Worten, bei dem Betriebszustandsdatum wird der entsprechende Abgabepunkt für die Durchführung eines Abgabevorgangs verwendet.

Bei einem Abschlusszustandsdatum kann die mindestens eine Abgabevorrichtung des Abgabepunkts aufgrund eines abgeschlossenen, aber noch nicht bezahlten Abgabevorgangs in einem Endzustand sein. In diesem Zustand kann die Abgabevorrichtung des Abgabepunkts in der Ausgangsposition angeordnet sein. Mit anderen Worten, bei dem Abschlusszustandsdatum wird der entsprechende Abgabepunkt nicht für die Durchführung eines Abgabevorgangs verwendet, wurde jedoch für die Durchführung eines (noch nicht bezahlten) Abgabevorgangs verwendet und ist insbesondere (noch) nicht für die Durchführung eines weiteren Abgabevorgangs verfügbar.

Die zumindest drei Zustände können logisch miteinander gekoppelt sein. Ferner kann der Betriebszustand in einen ersten Betriebszustand und einen zweiten Betriebszustand bzw. in ein erstes Betriebszustandsdatum und ein zweites Betriebszustandsdatum unterteilbar sein. In dem ersten Betriebszustand kann beispielsweise die Abgabevorrichtung aus der Abgabevorrichtungsaufnahme entnommen sein, jedoch noch keine Energie übertragen werden. In dem zweiten Betriebszustand kann die Abgabevorrichtung aus der Abgabevorrichtungsaufnahme entnommen sein und Energie übertragen werden. Es versteht sich, dass bei Varianten der Erfindung weitere Zustandsdaten bzw. Zustandsdatumswerte denkbar sind.

Gemäß einer weiteren bevorzugten Ausführungsform des erfindungsgemäßen Verfahrens kann das Verfahren ferner umfassen:
- Bereitstellen einer Layout-Datenbank, enthaltend mindestens ein Tankstellen-Layout (bzw. Forecourt-Layout) der mindestens einen Tankstelle des Energieabgabesystems,
- das Bestimmen zumindest der ersten Zuordnungswahrscheinlichkeit und der zweiten Zuordnungswahrscheinlichkeit ferner basiert auf einem Auswerten des Tankstellen-Layouts.

Insbesondere kann das Hintergrundsystem einen (zuvor genannten) Datenspeicher umfassen, eingerichtet zum Speichern der Layout-Datenbank. Insbesondere kann die Layout-Datenbank von jeder Tankstelle des Energieabgabesystems ein Tankstellen-Layout enthalten. Ein Tankstellen-Layout kann die geometrische Anordnung der Abgabevorrichtungen und/oder Abgabepunkte auf dem Forecourt einer Tankstelle enthalten und insbesondere Entfernungsinformationen zwischen Abgabevorrichtungen und/oder zwischen Abgabepunkten der jeweiligen Tankstelle bereitstellen. Vorzugsweise zusätzlich kann ein Tankstellen-Layout umfassen: Reichweiteninformationen bzw. Längeninformationen über die maximale Reichweite eines Ladekabels oder eines Schlauchs einer Abgabevorrichtung sowie insbesondere ein Signalstärke-Mapping über die Empfangbarkeit von Beaconsignalen abhängig von der Abgabevorrichtung (also vom Standort des Beacons) und vom Standort des empfangenden mobilen Endgeräts. Das Signalstärke-Mapping kann insbesondere Abschattungen von Funksignalen berücksichtigen, wie etwa die Anwesenheit von Zapfsäulen, Baustrukturen und andere vergleichbare bauliche Gegebenheiten auf einer Tankstelle. Indem die geometrische Situation einer Tankstelle berücksichtigt wird und beispielsweise daraus abgeleitet werden kann, wie weit eine Abgabevorrichtung bewegt werden kann und/oder welche Beacons an welcher Stelle des Forecourt empfangbar sind, kann ein Zuordnen noch zuverlässiger durchgeführt werden.

Gemäß einer weiteren Ausführungsform des erfindungsgemäßen Verfahrens kann das Verfahren ferner umfassen:
- Bereitstellen einer Nutzerdatenbank, enthaltend eine Mehrzahl von Nutzerkonten, jeweils umfassend zumindest eine Endgerätekennung des mobilen Endgeräts des jeweiligen Nutzers und eine (bevorzugte) Energieart, die bei einem Abgabevorgang des jeweiligen Nutzers verwendet wird,
- Identifizieren eines Nutzerkontos, basierend auf einem Vergleichen der empfangenen Endgerätekennung des ersten mobilen Endgeräts mit den Endgerätekennungen der Mehrzahl der Nutzerkonten, und
- das Bestimmen zumindest der ersten Zuordnungswahrscheinlichkeit und der zweiten Zuordnungswahrscheinlichkeit ferner basiert auf der bevorzugten Energieart des identifizierten Nutzerkontos.

Insbesondere kann das Hintergrundsystem einen (zuvor genannten) Datenspeicher umfassen, eingerichtet zum Speichern der Nutzerdatenbank. Die Nutzerdatenbank kann eine Mehrzahl von Nutzerkonten bzw. Nutzerdatensätzen enthalten. Ein Nutzerkonto enthält zumindest die Endgerätekennung des mobilen Endgeräts des Nutzers und eine bevorzugte Energieart (z.B. elektrische Energie, Diesel, Benzin, Super, Erdgas etc.) der Energie, der Nutzer bevorzugt bezieht. Es versteht sich, dass ein Nutzerkonto weitere Nutzerdaten enthalten kann, wie Nutzername, Nutzeradresse, Abrechnungsdaten etc.

Beim Auswerten kann zunächst festgestellt werden, ob für eine empfangene Endgerätekennung ein Nutzerkonto mit dieser Endgerätekennung gespeichert ist. Wenn ein Nutzerkonto gespeichert ist, kann die in dem identifizierten Nutzerkonto gespeicherte bevorzugte Energieart ausgelesen und bei dem Auswerten berücksichtigt werden. Wenn beispielsweise an einem ersten Abgabepunkt der Mehrzahl von Abgabepunkten die ausgelesene bevorzugte Energieart verfügbar ist und/oder der betrachtete Tankvorgang mit der bevorzugten Energieart erfolgt und an einem zweiten Abgabepunkt die ausgelesene bevorzugte Energieart nicht verfügbar ist und/oder der betrachtete Tankvorgang mit einer anderen als der bevorzugten Energieart erfolgt, kann die Zuordnungswahrscheinlichkeit des mobilen Endgeräts des Nutzers zum ersten Abgabepunkt erhöht werden, und die Zuordnungswahrscheinlichkeit zum zweiten Abgabepunkt kann verringert werden.

Gemäß einer weiteren Ausführungsform des erfindungsgemäßen Verfahrens kann das Bestimmen der ersten Zuordnungswahrscheinlichkeit und der zweiten Zuordnungswahrscheinlichkeit ferner basieren auf einem Vergleichen des ersten Beacon-Signalstärkedatums der ersten Datensatzgruppe und des ersten Beacon-Signalstärkedatums der zweiten Datensatzgruppe (und/oder des zweiten Beacon-Signalstärkedatums der ersten Datensatzgruppe und des zweiten Beacon-Signalstärkedatums der zweiten Datensatzgruppe) und/oder auf einem Vergleichen des ersten Zustandsdatums der erste Datensatzgruppe und des ersten Zustandsdatums der zweiten Datensatzgruppe (und/oder des zweiten Zustandsdatums der zweiten Datensatzgruppe und des zweiten Zustandsdatums der zweiten Datensatzgruppe). Insbesondere kann hierdurch der zeitliche Zustandsverlauf der mindestens zwei Abgabevorrichtungen und/oder der zeitliche Abstandsverlauf des mindestens einen mobilen Endgeräts zu den mindestens zwei Abgabevorrichtungen (noch besser) berücksichtigt werden. Die Zuverlässigkeit des Zuordnens kann noch weiter gesteigert werden.

Gemäß einer bevorzugten Ausführungsform des erfindungsgemäßen Verfahrens kann das Vergleichen der Beacon-Signalstärkedaten (miteinander, wie zuvor beschrieben wurde) und/oder das Vergleichen der Zustandsdaten (miteinander, wie zuvor beschrieben wurde) umfassen ein Ableiten eines zeitabhängigen Verlaufsmusters (insbesondere enthaltend den Bewegungsverlauf des ersten mobilen Endgeräts in Relation zu den mindestens zwei Abgabevorrichtungen sowie den Zustandsverlauf der mindestens zwei Abgabevorrichtungen). Das abgeleitete Verlaufsmusters kann mit mindestens einem vordefinierten Abgabevorgangsreferenzmuster verglichen werden. Beispielsweise kann in einem (zuvor beschriebenen) Datenspeicher eine Mehrzahl von Abgabevorgangsreferenzmuster gespeichert sein. Ein Abgabevorgangsreferenzmuster kann einen Bewegungsverlauf eines mobilen Endgeräts in Relation zu den mindestens zwei Abgabevorrichtungen sowie den Zustandsverlauf der mindestens zwei Abgabevorrichtungen darstellen, wie sie bei einem Abgabevorgang an einem bestimmten der zumindest zwei Abgabepunkte typisch sind. Das Bestimmen der ersten Zuordnungswahrscheinlichkeit und der zweiten Zuordnungswahrscheinlichkeit kann ferner basieren auf dem Vergleichsergebnis des Vergleichs des abgeleiteten Verlaufsmusters mit dem mindestens einen vordefinierten Abgabevorgangsreferenzmuster. Vorzugsweise kann einem Abgabevorgangsreferenzmuster eine Zuordnungswahrscheinlichkeit für die Zuordnung zwischen einem mobilen Endgerät und einem Abgabepunkt und/oder ein (zuvor beschriebener Erhöhungsfaktor) zugeordnet sein. Wenn beispielsweise eine (ausreichende) Übereinstimmung zwischen dem abgeleiteten Verlaufsmuster und einem ersten Abgabevorgangsreferenzmuster festgestellt wird, kann das Bestimmen der ersten Zuordnungswahrscheinlichkeit und der zweiten Zuordnungswahrscheinlichkeit (und ggf. weiterer Zuordnungswahrscheinlichkeiten) basieren auf der Zuordnungswahrscheinlichkeit und/oder dem Erhöhungsfaktor, der dem ersten Abgabevorgangsreferenzmuster zugeordnet ist.

Gemäß einer weiteren Ausführungsform des erfindungsgemäßen Verfahrens kann das Verfahren ein selbstlernendes Verfahren sein bzw. kann das Hintergrundsystem ein selbstlernendes Hintergrundsystem sein. Insbesondere kann bei einem selbstlernenden Verfahren das Bestimmen bzw. Ermitteln der Zuordnungswahrscheinlichkeiten anhand von Nutzereingaben durch das System erlernt werden. Beispielsweise kann in einer Anlernphase die Auswahl des Abgabepunktes zunächst durch den Nutzer erfolgen, um insbesondere Trainingsdaten zu generieren. In einem zweiten Trainingsmodus kann das Hintergrundsystem (beispielsweise umfassend ein neuronales Netz oder dergleichen) einen oder mehrere Vorschläge ermitteln, aus denen Nutzer auswählen/bzw. bestätigen (so genanntes reinforcement learning).

Vorzugsweise erfolgt ein (finales) Zuordnen zwischen mobilem Endgerät und Abgabepunkt bzw. Abgabevorgang nach einer Beendigung des Abgabevorgangs (wenn also eine Abgabevorrichtung den Abschlusszustandsdatum erreicht hat).

Gemäß einer weiteren Ausführungsform kann das Auswerten der ersten Zuordnungswahrscheinlichkeit und der zweiten Zuordnungswahrscheinlichkeit ferner basieren auf Bilddaten, die von einer Kamera der Tankstelle bereitgestellt werden. Insbesondere können Informationen aus Kamera- und Bildverarbeitungssystemen herangezogen werden, z.B. erfasste Kennzeichen und/oder Fahrzeugpositionen auf dem Forecourt. Beispielsweise kann hierdurch die Fahrzeugposition in Bezug zu einem Abgabepunkt bewertet werden. Weiterhin kann in der Nutzerdatenbank zu einem Nutzerkonto ein Fahrzeugkennzeichen hinterlegt sein, sodass das Zuordnen des Abgabepunkts zu einem mobilen Endgerät unterstützt werden kann durch das Auswerten von Bilddaten und das Ermitteln der Position eines Fahrzeugs mit einem erkannten Kennzeichen, das hinterlegt ist zu einem Nutzerkonto (und das damit zugehörig ist zu einem an der Tankstelle erkannten mobilen Endgerät).

Es ist ebenso möglich, dass ein (finales) Zuordnen zwischen einem Abgabepunkt und einem mobilen Endgerät bereits zu einem früheren Zeitpunkt im Abgabevorgangsablauf erfolgen kann. Dies ist z.B. bei Prepaid-Verfahren möglich, bei denen vor dem Start des Energieflusses eines Abgabevorgangs eine Vorautorisierung erfolgt. Alternativ kann es auch vorkommen, dass der Abgabepunkt bereits ausgewählt werden kann/soll während der Abgabevorgang noch läuft. In diesen Fällen können Abgabepunktdatensätze eine andere Bedeutung haben und müssen beispielsweise bei der Berechnung der Zuordnungswahrscheinlichkeit anders berücksichtigt werden als in den zuvor beschriebenen Ausführungsbeispielen ("eingehängt und Zahlung erwartet" / "tankt" / "entnommen" wären zum Beispiel Zustände, die bei einem bei Prepaid-Verfahren zu 0% Zuordnungswahrscheinlichkeit bei der Abgabepunktauswahl führen müssten). Je früher im Ablauf die Zuordnung erfolgt, desto weniger Endgerätedatensätze und/oder Abgabepunktdatensätzen fließen in die Berechnung mit ein. Events, die nach der Auswahl erfolgen, können jedoch weiterhin ausgewertet werden, z.B. zur Erkennung von Fehlzuordnungen. Es kann insbesondere bei frühem Zuordnen anstatt einer automatischen Auswahl des Abgabepunktes ein Vorschlag von einer oder einer Mehrzahl an Abgabepunkten mit der höchsten Zuordnungswahrscheinlichkeit erfolgen, aus denen ein Nutzer dann auswählen kann.

In einem weiteren Beispiel ist es denkbar, dass nur ein Beacon je Abgabepunkt und nicht je Abgabevorrichtung vorgesehen ist. Dieser Beacon wäre nicht beweglich, wie es bei Beacons in den Abgabevorrichtungen der Fall ist, wenn die Abgabevorrichtung entnommen wird. Dennoch können auch in diesem Fall Annäherungen festgestellt werden.

Ein weiterer Aspekt der Erfindung ist ein Computerprogramm, umfassend Befehle, die bewirken, dass ein Prozessor eines Hintergrundsystems die zuvor beschriebenen Verfahrensschritte ausführt.

Insbesondere kann das zuvor beschriebene Verfahren zumindest teilweise in einem Computerprogramm implementiert sein. Das Computerprogramm umfasst Programmanweisungen, die einen Prozessor zur Ausführung und/oder Steuerung des Verfahrens gemäß der Erfindung veranlassen, wenn das Computerprogramm von dem Prozessor ausgeführt wird. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein.

Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger/persistenter oder flüchtiger) Programmspeicher des Prozessors oder ein Teil davon. Das Speichermedium kann beispielsweise ein gegenständliches oder körperliches Speichermedium sein.

Ein weiterer Aspekt ist ein (zuvor beschriebenes) Hintergrundsystem für ein Energieabgabesystem mit einer Tankstelle, umfassend zumindest einen ersten Abgabepunkt und einen zweiten Abgabepunkt, wobei der erste Abgabepunkt mindestens eine erste Abgabevorrichtung mit einem ersten Beacon umfasst und der zweite Abgabepunkt mindestens eine zweite Abgabevorrichtung mit einem zweiten Beacon umfasst. Das Hintergrundsystem umfasst ein erstes Empfangsmodul, eingerichtet zum wiederholenden Empfangen zeitabhängiger Endgerätedatensätze von einem ersten mobilen Endgerät, wobei jeder zeitabhängige Endgerätedatensatz zumindest enthält: eine Endgerätekennung des mobilen Endgeräts, eine erste Beaconkennung des ersten Beacons, eine zweite Beaconkennung des zweiten Beacons, ein erstes Beacon-Signalstärkedatum eines durch das mobile Endgerät empfangenen ersten Beaconsignals des ersten Beacons, ein zweites Beacon-Signalstärkedatum eines durch das mobile Endgerät empfangenen zweiten Beaconsignals des zweiten Beacons und ein Empfangszeitdatum. Das Hintergrundsystem umfasst ein zweites Empfangsmodul, eingerichtet zum wiederholenden Empfangen zeitabhängiger Abgabepunktdatensätze des ersten Abgabepunkts und des zweiten Abgabepunkts, wobei jeder zeitabhängige Abgabepunktdatensatz zumindest enthält: ein Zustandserfassungszeitdatum und wenigstens eines von: einem ersten Zustandsdatum des ersten Abgabepunkts zusammen mit einer ersten Abgabepunktkennung des ersten Abgabepunkts und einem zweiten Zustandsdatum des zweiten Abgabepunkts zusammen mit einer zweiten Abgabepunktkennung des zweiten Abgabepunkts. Das Hintergrundsystem umfasst ein Gruppierungsmodul, eingerichtet zum zeit-, zähler- und/oder anlassgesteuerten Bilden von Datensatzgruppen aus den empfangenen Abgabepunkdatensätzen und Endgerätedatensätzen.

Das Hintergrundsystem umfasst ein Bestimmungsmodul, eingerichtet zum Bestimmen zumindest einer ersten Zuordnungswahrscheinlichkeit über eine Zuordnung des ersten Abgabepunkts zu dem ersten mobilen Endgerät und einer zweiten Zuordnungswahrscheinlichkeit über eine Zuordnung des zweiten Abgabepunkts zu dem ersten mobilen Endgerät, basierend auf den Daten der ersten Datensatzgruppe und/oder der Daten der zweiten Datensatzgruppe. Das Bestimmen berücksichtigt insbesondere die zeitliche Reihenfolge von Abgabepunkdatensätzen und Endgerätedatensätzen, die in den Datensatzgruppen enthalten sind.

Das Hintergrundsystem umfasst ein Zuordnungsmodul, eingerichtet zum Zuordnen des ersten Abgabepunkts oder des zweiten Abgabepunkts zu dem ersten mobilen Endgerät, zumindest basierend auf einem Auswerten der ersten Zuordnungswahrscheinlichkeit und der zweiten Zuordnungswahrscheinlichkeit.

Zeitgesteuertes Bilden von Datensatzgruppen bedeutet bei der vorliegenden Erfindung insbesondere, dass die Datensatzgruppe n+1 nach Ablauf einer einstellbaren Zeit nach der Datensatzgruppe n gebildet wird aus allen Datensätze, die während dieser einstellbaren Zeit empfangen wurden, also ein Empfangszeitdatum bzw. ein Zustandserfassungszeitdatum aufweisen, welches innerhalb definierter Grenzzeitdaten liegt. Zählerbezogenes Bilden von Datensatzgruppen bedeutet bei der vorliegenden Erfindung insbesondere, dass die Datensatzgruppe n+1 gebildet wird, sobald nach dem Bilden von Datensatzgruppe n eine (einstellbare) Anzahl von Abgabepunkdatensätzen und Endgerätedatensätzen empfangen wurde aus allen diesen empfangenen Datensätzen. Anlassbezogenes Bilden von Datensatzgruppen bedeutet bei der vorliegenden Erfindung insbesondere, dass die Datensatzgruppe n+1 gebildet wird, sobald nach dem Bilden von Datensatzgruppe n ein Abgabepunkdatensatz mit einem vordefinierten Ereignis empfangen wurde (z.B. eine Zustandsänderung in Form eines Entnehmens oder Einhängens einer Abgabevorrichtung) aus allen empfangenen Datensätzen seit der Bildung der Datensatzgruppe n. Das Gruppierungsmodul ist insbesondere eingerichtet zum Bereitstellen der gebildeten Datensatzgruppen dem beschriebenen Bestimmungsmodul, n ist hierbei jeweils eine natürliche Zahl.

Das Hintergrundsystem, insbesondere ein Prozessor des Hintergrundsystem, ist insbesondere eingerichtet zum Ausführen des zuvor beschriebenen Verfahrens.

Das Hintergrundsystem kann mindestens eine Datenverarbeitungsvorrichtung umfassen, eingerichtet zur Ausführung und/oder Steuerung des anmeldungsgemäßen Verfahrens oder umfassend jeweilige Mittel zur Ausführung und/oder Steuerung der Schritte des erfindungsgemäßen Verfahrens. Dabei können entweder alle Schritte des erfindungsgemäßen Verfahrens von den Mitteln gesteuert werden, oder alle Schritte des erfindungsgemäßen Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden.

Die Mittel der offenbarten Datenverarbeitungsvorrichtung können, wie beschrieben, Hardware- und/oder Software-Komponenten umfassen. Die Mittel können beispielsweise mindestens einen Speicher mit Programmanweisungen eines Computerprogramms (z.B. des anmeldungsgemäßen Computerprogramms) und mindestens einen Prozessor ausgebildet zum Ausführen von Programmanweisungen aus dem mindestens einen Speicher umfassen. Dementsprechend soll gemäß der Erfindung auch zumindest eine Datenverarbeitungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Datenverarbeitungsvorrichtung zu veranlassen, das Verfahren gemäß der Erfindung auszuführen und/oder zu steuern.

Ein noch weiterer Aspekt der Erfindung ist ein Energieabgabesystem. Das Energieabgabesystem umfasst ein zuvor beschriebenes Hintergrundsystem. Das Energieabgabesystem umfasst zumindest einen ersten Abgabepunkt und einen zweiten Abgabepunkt. Der erste Abgabepunkt und der zweite Abgabepunkt umfassen zumindest eine erste Abgabevorrichtung mit einem ersten Beacon und eine zweite Abgabevorrichtung mit einem zweiten Beacon.

Vorzugweise weist ein Energieabgabesystem mindestens eine Tankstelle mit einer Mehrzahl von Abgabepunkten auf, wie zuvor beschrieben wurde. Insbesondere kann das Energieabgabesystem zudem das mindestens eine mobile Endgerät umfassen.

Ein zuvor beschriebenes Modul (z.B. Gruppierungsmodul, Bestimmungsmodul, Zuordnungsmodul etc.), eine Vorrichtung, eine Einheit etc. kann zumindest teilweise Hardwareelemente (z.B. Prozessor, Speichermittel etc.) und/oder zumindest teilweise Softwareelemente (z.B. ausführbaren Code) umfassen. Es sei ferner angemerkt, dass Begriffe, wie "erste", "zweite", "weitere" etc. nicht eine Reihenfolge angeben, sondern insbesondere zur Unterscheidung zweier Elemente dienen. Ausgenommen davon sind, wie bereits erwähnt wurde, die Ausdrücke "erste vorläufige Wahrscheinlichkeit", "zweite vorläufige Wahrscheinlichkeit" und "dritte vorläufige Wahrscheinlichkeit", die eine zeitliche Reihenfolge angeben.

Die Merkmale der Verfahren, Computerprogramme, Hintergrundsysteme und Energieabgabesysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, das erfindungsgemäße Computerprogramm, das erfindungsgemäße Hintergrundsystem und das erfindungsgemäße Energieabgabesystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit den Zeichnungen. In den Zeichnungen zeigt:
- Fig. 1: eine schematische Ansicht eines Ausführungsbeispiels eines Hintergrundsystems gemäß der vorliegenden Erfindung,
- Fig. 2: eine schematische Ansicht eines Ausführungsbeispiels eines Energieabgabesystems gemäß der vorliegenden Erfindung,
- Fig. 3: ein Diagramm eines Ausführungsbeispiels eines Verfahrens gemäß der vorliegenden Anmeldung,
- Fig. 4: eine schematische Veranschaulichung eines Anwendungsbeispiels, bei dem mittels eines Ausführungsbeispiels des erfindungsgemäßen Verfahrens bei einem Ausführungsbeispiel eines erfindungsgemäßen Energieabgabesystems ein Zuordnen eines Abgabepunkts und eines mobilen Endgeräts erfolgt,
- Fig. 5a, b: eine weitere Veranschaulichung eines Anwendungsbeispiels, bei dem mittels eines Ausführungsbeispiels des erfindungsgemäßen Verfahrens bei einem Ausführungsbeispiel eines erfindungsgemäßen Energieabgabesystems ein Zuordnen eines Abgabepunkts und eines mobilen Endgeräts erfolgt, und
- Fig. 6a, b: eine weitere Veranschaulichung eines Anwendungsbeispiels, bei dem mittels eines Ausführungsbeispiels des erfindungsgemäßen Verfahrens bei einem Ausführungsbeispiel eines erfindungsgemäßen Energieabgabesystems ein Zuordnen eines Abgabepunkts und eines mobilen Endgeräts erfolgt.

Nachfolgend werden für ähnliche Elemente ähnliche Bezugszeichen verwendet.

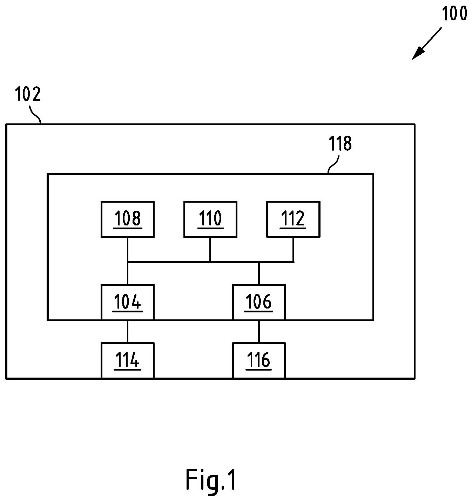

Die Figur 1 zeigt ein Hintergrundsystem 100 für ein (nicht gezeigtes) Energieabgabesystem mit einer Tankstelle, umfassend zumindest einen ersten Abgabepunkt und einen zweiten Abgabepunkt, wobei der erste Abgabepunkt mindestens eine erste Abgabevorrichtung mit einem ersten Beacon und der zweite Abgabepunkt mindestens eine zweite Abgabevorrichtung mit einem zweiten Beacon umfasst.

Insbesondere kann das Hintergrundsystem 100 durch mindestens eine Datenverarbeitungsvorrichtung 102 mit mindestens einem (nicht gezeigten) Prozessor gebildet sein, wobei der Prozessor eingerichtet ist zum Ausführen eines Computerprogramms 118 mit einer Mehrzahl von (Software-)Modulen 104 bis 112. Ferner kann die Datenverarbeitungsvorrichtung 102 eine erste Hardwareschnittstelle 114 zum Empfangen von ersten Signalen von mobilen Endgeräten und eine zweite Hardwareschnittstelle 116 zum Empfangen von zweiten Signalen einer Tankstellensteuerung umfassen. Die ersten Signale können insbesondere Endgerätedatensätze enthalten, und die zweiten Signale können insbesondere Abgabepunktdatensätze enthalten.

Ein erstes Empfangsmodul 104 ist eingerichtet zum wiederholenden Empfangen von zeitabhängigen Endgerätedatensätzen von einem (nicht gezeigten) ersten mobilen Endgerät und insbesondere zum Bereitstellen der zeitabhängigen Endgerätedatensätze für eine weitere Verarbeitung. Ein zweites Empfangsmodul 106 ist eingerichtet zum wiederholenden Empfangen von zeitabhängigen Abgabepunktdatensätzen des ersten Abgabepunkts und des zweiten Abgabepunkts und insbesondere zum Bereitstellen der zeitabhängigen Abgabepunktdatensätze für eine weitere Verarbeitung.

Jeder zeitabhängige Endgerätedatensatz enthält zumindest eine Endgerätekennung des ersten mobilen Endgeräts, eine erste Beaconkennung des ersten Beacons, eine zweite Beaconkennung des zweiten Beacons, ein erstes Beacon-Signalstärkedatum eines ersten durch das erste mobile Endgerät empfangenen Beaconsignals des ersten Beacons, ein zweites Beacon-Signalstärkedatum eines zweiten durch das erste mobile Endgerät empfangenen Beaconsignals des zweiten Beacons und ein Empfangszeitdatum. Wie bereits beschrieben wurde, kann ein zeitabhängiger Endgerätedatensatz vorzugsweise die Daten weiterer durch das erste mobile Endgerät empfangener Beaconsignale enthalten. Ein zeitabhängiger Endgerätedatensatz enthält hierbei die Daten der Beaconsignale, die zumindest nahezu gleichzeitig (beispielsweise innerhalb eines vordefinierten Zeitfensters) durch das erste mobile Endgerät empfangen wurden. Der jeweilige Empfangszeitpunkt bzw. Empfangszeitraum der Beaconsignale eines Endgerätedatensatzes bildet insbesondere die Grundlage des Empfangszeitdatums des jeweiligen zeitabhängige Endgerätedatensatzes.

Darüber hinaus enthält jeder zeitabhängige Abgabepunktdatensatz zumindest eine erste Abgabepunktkennung des ersten Abgabepunkts, eine zweite

Abgabepunktkennung des zweiten Abgabepunkts, ein erstes Zustandsdatum des ersten Abgabepunkts, ein zweites Zustandsdatum des zweiten Abgabepunkts und ein Zustandserfassungszeitdatum. Wenn eine Tankstelle mehr als zwei Abgabepunkte umfasst, kann ein Abgabepunktdatensatz vorzugsweise die Zustandsdaten der weiteren Abgabepunkte umfassen. Wie beschrieben wurde, kann insbesondere eine Tankstellensteuerung die genannten Zustandsdaten beispielsweise periodisch oder (nahezu) kontinuierlich erfassen. Vorzugsweise kann bei jeder detektierten Zustandsänderung eines der Abgabepunkte ein neuer zeitabhängiger Abgabepunktdatensatz generiert und übertragen bzw. durch das Hintergrundsystem 100 empfangen werden. Ein zeitabhängiger Abgabepunktdatensatz enthält insbesondere die Zustandsdaten von mindestens einem der Abgabepunkte, die zumindest nahezu gleichzeitig (beispielsweise innerhalb eines vordefinierten Zeitfensters) durch die Tankstellensteuerung erfasst wurden. Der jeweilige Erfassungszeitpunkt bzw. Erfassungszeitraum der Zustandsdaten eines Abgabepunktdatensatzes bildet insbesondere die Grundlage des Zustandserfassungszeitdatums des jeweiligen zeitabhängigen Abgabepunktdatensatzes.

Das Hintergrundsystem 100 umfasst zudem ein Gruppierungsmodul 108, eingerichtet zum zeit-, zähler- und/oder anlassgesteuerten Bilden von Datensatzgruppen aus den empfangenen Abgabepunkdatensätzen und Endgerätedatensätzen. Zeitgesteuertes Bilden von Datensatzgruppen bedeutet insbesondere, dass die Datensatzgruppe n+1 nach Ablauf einer einstellbaren Zeit nach der Datensatzgruppe n gebildet wird, aus allen Datensätzen, die während dieser Zeit empfangen wurden, also ein Empfangszeitdatum bzw. ein Zustandserfassungszeitdatum aufweisen, welches innerhalb definierter Grenzzeitdaten liegt. Zählerbezogenes Bilden von Datensatzgruppen bedeutet insbesondere, dass die Datensatzgruppe n+1 gebildet wird, sobald nach dem Bilden von Datensatzgruppe n eine (einstellbare) Anzahl von Abgabepunkdatensätzen und Endgerätedatensätzen empfangen wurden, aus allen diesen empfangenen Datensätzen. Anlassbezogenes Bilden von Datensatzgruppen bedeutet insbesondere, dass die Datensatzgruppe n+1 gebildet wird, sobald nach dem Bilden von Datensatzgruppe n ein Abgabepunkdatensatz mit einem bestimmten Ereignis empfangen wurde (z.B. Entnehmen oder Einhängen einer Abgabevorrichtung), aus allen Empfangenen Datensätzen seit Bildung der Datensatzgruppe n. Das Gruppierungsmodul stellt die gebildeten Datensatzgruppen dem nachfolgend beschriebenen Bestimmungsmodul zur Verfügung. Datensatzgruppen enthalten wenigstens einen Endgerätedatensatz und/oder wenigstens einen Abgabepunktdatensatz bzw. die Daten dieser Datensätze, durch Zuordnen eines jeweiligen Endgerätedatensatzes und/oder eines jeweiligen Abgabepunktdatensatzes zu einem Zeitwert. Wenn eine erste Datensatzgruppe aus wenigstens einem Endgerätedatensatz und wenigstens einem Abgabepunktdatensatz gebildet wird, dann weisen der wenigstens eine Endgerätedatensatz und der wenigstens eine Abgabepunktdatensatz im Wesentlichen einen gleichen Zeitwert als Empfangszeitdatum bzw. als Zustandserfassungsdatum auf. In entsprechender Weise können für weitere erhaltene Endgerätedatensätze und für weitere Abgabepunktdatensätze weitere (zweite, dritte, vierte, etc.) Datensatzgruppen gebildet werden.

Darüber hinaus umfasst das Hintergrundsystem ein Bestimmungsmodul 110, eingerichtet zum Bestimmen zumindest einer ersten Zuordnungswahrscheinlichkeit über eine Zuordnung des ersten Abgabepunkts zu dem ersten mobilen Endgerät und einer zweiten Zuordnungswahrscheinlichkeit über eine Zuordnung des zweiten Abgabepunkts zu dem ersten mobilen Endgerät, basierend auf den Daten der ersten Datensatzgruppe und/oder der Daten der zweiten Datensatzgruppe. Das Bestimmen berücksichtigt insbesondere die zeitliche Reihenfolge von Abgabepunkdatensätzen und Endgerätedatensätzen, die in den Datensatzgruppen enthalten sind. Insbesondere können die Zustandsdaten und die Beacon-Signalstärkedaten ausgewertet werden, um zu bestimmen, mit welcher Wahrscheinlichkeit ein erstes mobiles Endgerät bzw. dessen Nutzer einem ersten Abgabepunkt, an dem ein Abgabevorgang durchgeführt wurde, oder einem zweiten Abgabepunkt, an dem (ebenfalls) ein Abgabevorgang durchgeführt wurde, zugeordnet werden kann. Wie beschrieben wurde (und noch näher beschrieben werden wird), können hierfür Entfernungsdaten bestimmt werden, basierend auf den jeweiligen Beacon-Signalstärkedaten. Zudem können die Zustandsdaten mit den Entfernungsdaten bei dem Auswerten verknüpft werden.

Das Hintergrundsystem 100 umfasst ein Zuordnungsmodul 112, eingerichtet zum Zuordnen des ersten Abgabepunkts oder des zweiten Abgabepunkts zu dem ersten mobilen Endgerät, zumindest basierend auf einem Auswerten der ersten Zuordnungswahrscheinlichkeit und der zweiten Zuordnungswahrscheinlichkeit. Wie beschrieben wurde (und noch näher beschrieben werden wird), können zusätzlich zum Beispiel Kennungszuordnungen, ein Tankstellen-Layout und/oder Nutzerkonten beim Auswerten berücksichtigt werden.

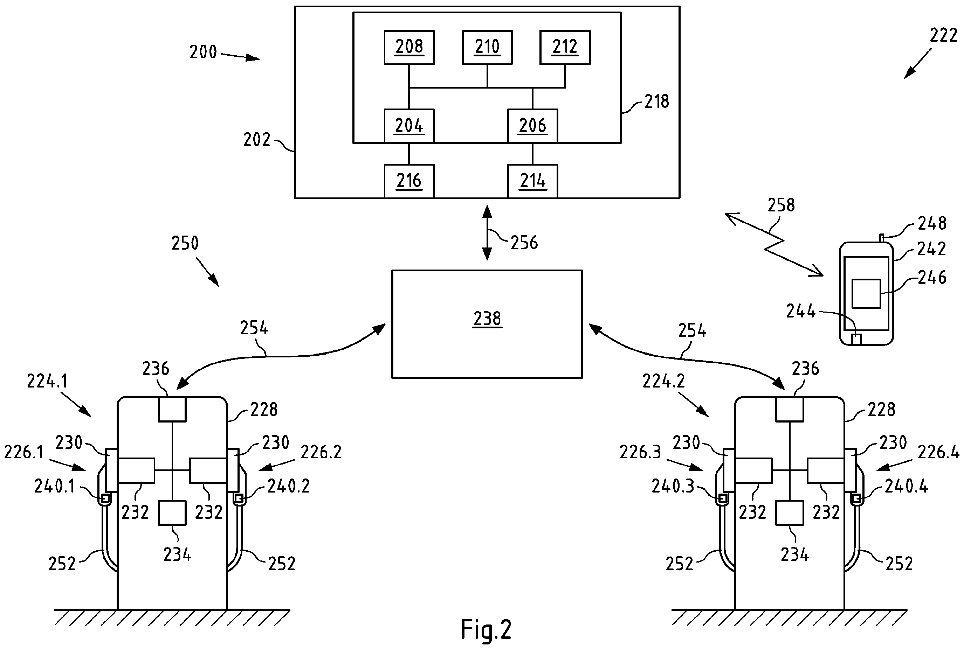

Die Figur 2 zeigt ein Ausführungsbeispiel eines Energieabgabesystems 222 gemäß der vorliegenden Erfindung, umfassend ein Ausführungsbeispiel eines Hintergrundsystems 200 gemäß der vorliegenden Erfindung. Das Hintergrundsystem 200 kann durch mindestens eine Datenverarbeitungsvorrichtung 202 mit mindestens einem (nicht gezeigten) Prozessor und beispielhaften zwei Hardwareschnittstellen 214, 216 gebildet sein, wobei der Prozessor eingerichtet ist zum Ausführen eines Computerprogramms 218 mit einem ersten Empfangsmodul 204, einem zweiten Empfangsmodul 206, einem Gruppierungsmodul 208, einem Bestimmungsmodul 210 und einem Zuordnungsmodul 212. Zur Vermeidung von Wiederholungen wird insbesondere auf die Ausführungen zum Ausführungsbeispiel nach Figur 1 verwiesen, und nachfolgend werden im Wesentlichen nur die Unterschiede hierzu erläutert.

Das Energieabgabesystem 222 umfasst mindestens eine Tankstelle 250, vorzugsweise eine Mehrzahl von Tankstellen. Eine Tankstelle 250 eines Energieabgabesystems 222 ist insbesondere eingerichtet zum Abgeben von Energie an (nicht gezeigte) Fahrzeuge. Eine Tankstelle 250 umfasst zumindest zwei Abgabepunkte 224.1, 224.2. Beispielsweise können der erste Abgabepunkt 224.1 und der zweite Abgabepunkt 224.2 im Wesentlichen identisch gebildet sein. Vorzugsweise kann eine Tankstelle drei oder mehr Abgabepunkte aufweisen.

Wie aus der Figur 2 zu erkennen ist, weist jeder Abgabepunkt 224.1, 224.2 beispielhaft jeweils zwei Abgabevorrichtungen 226.1 bis 226.4 auf. Insbesondere weist der erste Abgabepunkt 224.1 eine erste Abgabevorrichtung 226.1 und eine zweite Abgabevorrichtung 226.2 und der zweiten Abgabepunkt 224.2 eine dritte Abgabevorrichtung 226.3 und eine vierte Abgabevorrichtung 226.4 auf. Es versteht sich, dass bei anderen Varianten der Erfindung ein Abgabepunkt auch mehr oder weniger Abgabevorrichtungen umfassen kann. Eine Abgabevorrichtung 226.1 bis 226.4 ist eingerichtet zum Abgeben der Energie an ein Fahrzeug.

Vorliegend sind die Abgabevorrichtungen 226.1 bis 226.4 beispielhaft als Zapfpistolen dargestellt, die jeweils über einen Schlauch 252 mit einer Basis 228 des Abgabepunkts 224.1, 224.2 in Form einer Säule verbunden sind. Eine Zapfpistole dient insbesondere dem Abgeben von Energie in Form von flüssigem Kraftstoff. Wie bereits beschrieben wurde, kann ein Abgabepunkt auch einen Ladestecker und/oder eine Ladesteckdose umfassen.

Wie aus der Figur 2 ferner zu erkennen ist, befinden sich die Zapfpistolen der Abgabepunkte 224.1, 224.2 in der Ausgangsposition. In dieser Ausgangsposition ist eine Zapfpistole in einer Zapfpistolenaufnahme 230 eingehängt. Jeder Abgabepunkt kann zur Detektion des (augenblicklichen) Zustands eines Abgabepunkts 224.1, 224.2, insbesondere der jeweiligen Abgabevorrichtungen 226.1 bis 226.4, Sensoren 232, 234 umfassen. Beispielsweise kann ein Sensor 232 eingerichtet sein zum Detektieren, ob eine Zapfpistole eingehängt ist oder nicht. Zudem kann der Sensor 234 eingerichtet sein zum Erfassen eines Energieflusses (vorliegend eines Kraftstoffflusses), insbesondere einer abgegebenen Energiemenge. Insbesondere kann mit diesen Sensoren 232, 234 festgestellt werden, ob sich ein Abgabepunkt 224.1, 224.2 in einem Betriebsbereitzustand (ob also ein Betriebsbereitzustandsdatum vorliegt), in einem Betriebszustand (ob also ein Betriebszustandsdatum vorliegt) oder in einem Endzustand (ob also ein Abschlusszustandsdatum vorliegt) (augenblicklich) befindet. Eine Tankstelle 250 kann vorzugsweise über eine (lokale) Tankstellensteuerung 238 verfügen. Über ein lokales Kommunikationsnetz 254 und ein Kommunikationsmodul 236 kann ein jeweiliges (augenblickliches) Zustandsdatum einer jeweiligen Abgabevorrichtung 226.1 bis 226.4 (und damit auch des jeweiligen Abgabepunkts 224.1, 224.2) an die Tankstellensteuerung 238 übertragen werden. Die Tankstellensteuerung 238 kann eingerichtet sein zum beispielsweise periodischen Generieren von (zuvor beschriebenen) zeitabhängigen Abgabepunktdatensätzen. Alternativ kann vorgesehen sein, einen zeitabhängigen Abgabepunktdatensatz nur bei Detektion einer Zustandsänderung einer der zumindest zwei Abgabepunkte 224.1, 224.2 zu generieren. Die generierten Abgabepunktdatensätze können über ein weiteres Kommunikationsnetz 256 an das Hintergrundsystem 200 übertragen werden.

Ferner kann die Tankstellensteuerung 238 eingerichtet sein zum Setzen eines Abgabepunkts von dem Endzustand in den Betriebsbereitzustand bei Detektion einer Bezahlung eines an dem Abgabepunkt 224.1, 224.2 durchgeführten Abgabevorgangs.

Erfindungsgemäß weist jede Abgabevorrichtung 226.1 bis 226.4 jeweils einen Beacon 240.1 bis 240.4 auf. Beispielsweise kann ein Beacon 240.1 bis 240.4 (z.B. ein BLE-Beacon) an einer Außenseite einer Abgabevorrichtung 226.1 bis 226.4 angebracht sein, beispielsweise aufgeklebt sein. Insbesondere weist die erste Abgabevorrichtung 226.1 einen ersten Beacon 240.1, die zweite Abgabevorrichtung 226.2 einen zweiten Beacon 240.2, die dritte Abgabevorrichtung 226.3 einen dritten Beacon 240.3 und die vierte Abgabevorrichtung 226.4 einen vierten Beacon 240.4 auf. Jeder Beacon 240.1 bis 240.4 ist insbesondere eingerichtet zum periodischen Aussenden eines jeweiligen Beaconsignals insbesondere in Form eines Advertising-Signals, jeweils enthaltend die (eindeutige) Beaconkennung des aussendenden Beacons 240.1 bis 240.4.

Gelangt ein mobiles Endgerät 242 in die Reichweite eines Beacons 240.1 bis 240.4, empfängt das mobile Endgerät 242 ein entsprechendes Beaconsignal (zumindest bei einer aktivierten Empfangsschnittstelle 244). Insbesondere kann das Energieabgabesystem 222 das mindestens eine mobile Endgerät 242 (z.B. ein Smartphone) umfassen.

Auf dem mobilen Endgerät 242 kann eine Energieabgabeanwendung 246 installiert sein, die von einem (nicht gezeigten) Prozessor des mobilen Endgeräts 242 (zumindest nach einer Aktivierung) ausgeführt werden kann. Die Energieabgabeanwendung 246 kann eingerichtet sein zum periodischen Generieren von (zuvor beschriebenen) Endgerätedatensätzen. Insbesondere kann das mobile Endgerät 242, unter Steuerung der Energieabgabeanwendung 246, bei einem Empfangen eines ersten Beaconsignals den RSSI des empfangenen Beaconsignals bestimmen. Der bestimmte RSSI kann als erstes Beacon-Signalstärkedatum zusammen mit der extrahierten ersten Beaconkennung einem Endgerätedatensatz hinzugefügt werden. Das Empfangszeitdatum des ersten Endgerätedatensatzes basiert insbesondere auf dem Empfangszeitpunkt des ersten Beaconsignals. Entsprechend können Daten weiterer empfangener Beaconsignale hinzugefügt werden.

Wie beschrieben wurde, können zur Reduzierung der Datenmenge durch das mobile Endgerät 242, unter Steuerung der Energieabgabeanwendung 246, weitere Vorprüfungsschritte durchgeführt werden. Beispielsweise kann eine zuvor beschriebene Mittelung der bestimmten RSSIs von ersten Beaconsignalen durchgeführt werden, die wiederholend in einem vordefinierten Zeitfenster empfangen wurden. Alternativ oder zusätzlich ist denkbar, dass ein Hinzufügen zu einem Endgerätedatensatz nur dann erfolgt, wenn der bestimmte RSSI einem vordefinierten Mindest-RSSI übersteigt und/oder wenn der bestimmte RSSI zu den N höchsten RSSI-Werten gehört, die von unterschiedlichen empfangenen Beaconsignalen innerhalb desselben vordefinierten Zeitfensters bestimmt wurden, und/oder wenn eine bestimmte Mindestanzahl von Beaconsignalen eines bestimmten Beacons innerhalb eines vordefinierten Zeitfensters empfangen wurde.

Die insbesondere periodisch generierten Endgerätedatensätze können über eine weitere Schnittstelle 248 des mobilen Endgeräts 242, unter Steuerung der Energieabgabeanwendung 246, und über ein weiteres Kommunikationsnetz 258, an das Hintergrundsystem 200 übertragen werden.

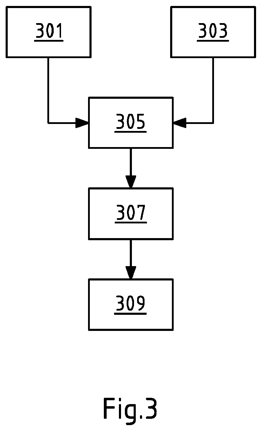

Die Figur 3 zeigt ein Diagramm eines Ausführungsbeispiels eines (computerimplementierten) Verfahrens gemäß der Erfindung. Das Verfahren dient insbesondere zum Betreiben eines Energieabgabesystems, beispielweise entsprechend dem Ausführungsbeispiel nach Figur 2, und kann insbesondere von einem Prozessor eines Hintergrundsystems ausgeführt werden.

In eine Schritt 301 erfolgt ein wiederholendes Empfangen, durch ein erstes Empfangsmodul eines Hintergrundsystems des Energieabgabesystems, zeitabhängiger Endgerätedatensätze von einem ersten mobilen Endgerät, wobei jeder zeitabhängige Endgerätedatensatz zumindest eine Endgerätekennung des mobilen Endgeräts, eine erste Beaconkennung des ersten Beacons, eine zweite Beaconkennung des zweiten Beacons, ein erstes Beacon-Signalstärkedatum eines ersten durch das Endgerät empfangenen Beaconsignals des ersten Beacons, ein zweites Beacon-Signalstärkedatum eines zweiten durch das Endgerät empfangenen Beaconsignals des zweiten Beacons und ein Empfangszeitdatum enthält, wie bereits beschrieben wurde.

In Schritt 303 erfolgt ein wiederholendes Empfangen, durch ein zweites Empfangsmodul des Hintergrundsystems, zeitabhängiger Abgabepunktdatensätze des ersten Abgabepunkts und des zweiten Abgabepunkts, wobei jeder zeitabhängige Abgabepunktdatensatz zumindest eine erste Abgabepunktkennung des ersten Abgabepunkts, eine zweite Abgabepunktkennung des zweiten Abgabepunkts, ein erstes Zustandsdatum des ersten Abgabepunkts, ein zweites Zustandsdatum des zweiten Abgabepunkts und ein Zustandserfassungszeitdatum enthält, wie bereits beschrieben wurde.

In Schritt 305 erfolgt ein (wiederholendes) Bilden, durch ein Gruppierungsmodul des Hintergrundsystems, zumindest einer ersten zeitabhängigen Datensatzgruppe und einer zweiten zeitabhängigen Datensatzgruppe, jeweils enthaltend einen Endgerätedatensatz und einen Abgabepunktdatensatz, insbesondere durch Zuordnen eines jeweiligen Endgerätedatensatzes zu einem jeweiligen Abgabepunktdatensatz, basierend auf den Empfangszeitdaten und den Zustandserfassungszeitdate, wie bereits beschrieben wurde.

In Schritt 307 erfolgt ein Bestimmen, durch ein Bestimmungsmodul des Hintergrundsystems, zumindest einer ersten Zuordnungswahrscheinlichkeit über eine Zuordnung des ersten Abgabepunkts zu dem ersten mobilen Endgerät und einer zweiten Zuordnungswahrscheinlichkeit über eine Zuordnung des zweiten Abgabepunkts zu dem ersten mobilen Endgerät, basierend auf den Daten der ersten Datensatzgruppe und/oder auf den Daten der zweiten Datensatzgruppe, wie bereits beschrieben wurde.

In Schritt 309 erfolgt ein Zuordnen, durch ein Zuordnungsmodul des Hintergrundsystems, des ersten Abgabepunkts (bzw. eines evtl. damit durchgeführten ersten Abgabevorgangs) oder des zweiten Abgabepunkts (bzw. eines evtl. damit durchgeführten zweiten Abgabevorgangs) zu dem ersten mobilen Endgerät, zumindest basierend auf einem Auswerten der ersten Zuordnungswahrscheinlichkeit und der zweiten Zuordnungswahrscheinlichkeit, wie bereits beschrieben wurde.

Vorzugsweise wird das erfindungsgemäße Verfahren bzw. werden die Schritte 301 bis 309 kontinuierlich ausgeführt. Dies meint, dass kontinuierlich zeitabhängige Datensätze empfangen werden, dann gruppiert, anschließend ausgewertet werden und dann eine entsprechende Zuordnung vorgenommen wird.

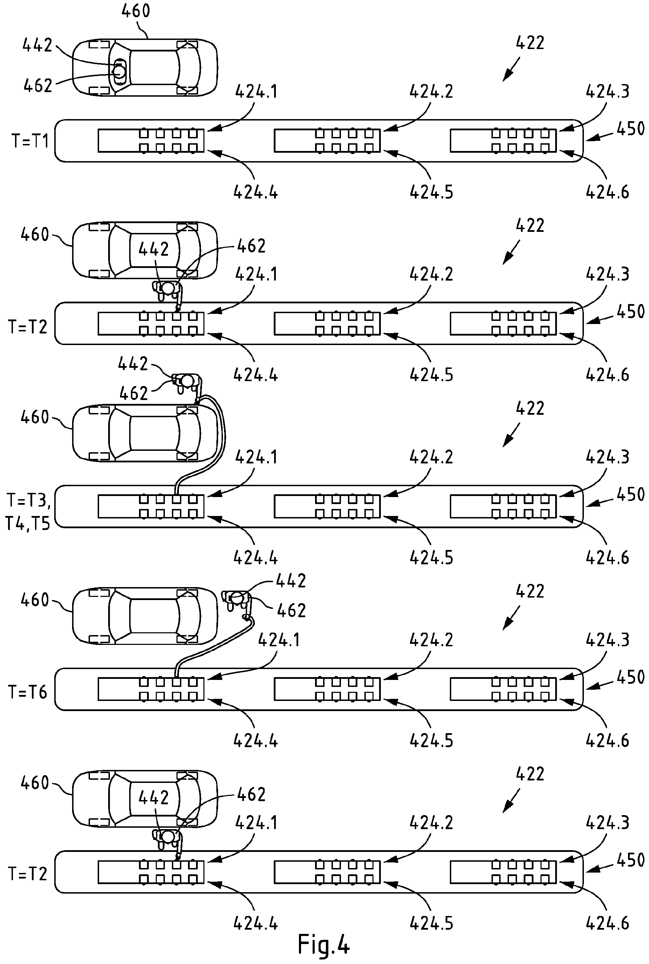

Die Figuren 4 bis 6 zeigen verschiedene Anwendungsbeispiele, bei denen mittels eines Ausführungsbeispiels des erfindungsgemäßen Verfahrens bei einem Ausführungsbeispiel eines erfindungsgemäßen Energieabgabesystems (z.B. entsprechend Figur 2) ein Zuordnen eines Abgabepunkts und eines mobilen Endgeräts erfolgt. Lediglich zu Gunsten einer besseren Übersicht wurden in den Figuren 4 bis 6 auf die Darstellung von Details (z.B. des Hintergrundsystems) verzichtet.

Wie aus der Figur 4 entnommen werden kann, umfasst das dargestellte Energieabgabesystem 422 eine Tankstelle 450 mit beispielhaften zwölf Abgabepunkten (von denen sechs Abgabepunkte 424.1 bis 424.6 dargestellt sind), wobei jeder Abgabepunkt 424.1 bis 424.6 vier Abgabevorrichtungen 1 bis 4 mit jeweils einem Beacon umfasst (zur besseren Übersicht wurden die Abgabevorrichtungen und die Beacons nicht mit Bezugszeichen versehen).

In der Figur 4 sind insbesondere verschiedenen Situationen während eines beispielhaften Abgabevorgangs zu unterschiedlichen Zeitpunkten T1 bis T7 dargestellt. Hierbei kann ein Abgabepunkt 424.1 bis 424.6 beispielhaft folgende Zustandsdaten aufweisen:
1. Betriebsbereitzustandsdatum (kurz "frei")
2. Erstes Betriebszustandsdatum (kurz "entnommen")
3. Zweites Betriebszustandsdatum (kurz "tankt")
4. Abschlusszustandsdatum (kurz "eingehängt und Zahlung erwartet").

Ferner werden in den nachfolgenden Beispielen folgende Abkürzungen verwendet:
- AP:: Abgabepunkt
- E10:: Superkraftstoff mit 10% Bioethanol
- E5:: Superkraftstoff mit 5% Bioethanol
- SP:: Super Plus
- D:: Diesel

Ein Fahrzeug 460 befährt einen (ansonsten leeren) Forecourt einer Tankstelle 450 mit zwölf Abgabepunkten (wie bereits beschrieben wurde, sind zur besonderen Übersicht sind lediglich sechs Abgabepunkte 424.1 bis 424.6 dargestellt). Der Nutzer 462 hat ein mobiles Endgerät 442 (beispielhaft ein Smartphone) bei sich mit einer Energieabgabeanwendung, die das erfindungsgemäße Verfahren unterstützt, wie beschrieben wurde. Jeder der zwölf Abgabepunkte ist mit vier Abgabevorrichtungen (beispielweise Zapfpistolen) ausgestattet und bietet insbesondere vier unterschiedliche Energiearten bzw. Kraftstoffsorten (z.B. E10, E5, SP, D) an. Jede Abgabevorrichtung (beispielweise Zapfpistole) ist erfindungsgemäß mit einem Beacon (z.B. ein BLE-Beacon) ausgestattet, der jeweils insbesondere eine eindeutige Beaconkennung periodisch aussendet.

In dem Hintergrundsystem können die jeweiligen Beaconkennungen den Abgabepunktkennungen und insbesondere den unterschiedlichen Kraftstoffsorten in einer Zuordnungsdatenbank zugeordnet sein. Außerdem kann im Hintergrundsystem das Layout des der Tankstelle (bzw. des Forecourtsystems) in einer Layout-Datenbank vorhanden sein, insbesondere in Hinblick darauf, welche Beacons an welcher Stelle des Forecourt empfangbar sind. Da die Abgabevorrichtungen und damit die Beacons in einem gewissen Radius beweglich sind, können keine absoluten quantifizierten Bedingungen angegeben werden, aber qualitative Aussagen sind möglich, beispielhaft und idealisiert das Forecourt-Layout aus Figur 4.

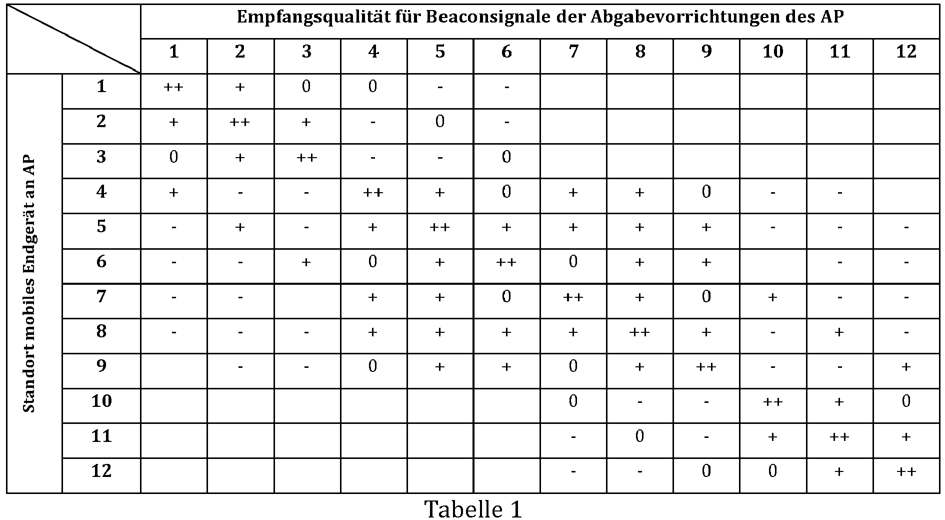

Tabelle 1 definiert eine exemplarische Zuordnung des Standorts eines mobilen Endgeräts auf dem Forecourt der Tankstelle zu der Empfangsqualität, mit der das mobile Endgerät Beaconsignale von den Abgabevorrichtungen der Abgabepunkte 1 bis 12 auf diesem Forecourt empfangen kann (Aus Gründen der Übersichtlichkeit sind die Abgabevorrichtungen nicht einzeln aufgeführt, sondern in den Spalten aggregiert).

Tabelle 1 repräsentiert dabei das Forecourt-Layout aus Figur 4. Die Empfangsqualität wird dabei beispielhaft symbolisiert von sehr gut (++) über gut (+), mäßig (0), schlecht (-) bis kein Signal (). Beispielweise kann ein mobiles Endgerät, das sich am Abgabepunkt 1 befindet, Beaconsignale der (mehreren) Abgabevorrichtungen von Abgabepunkt 1 naturgemäß sehr gut empfangen (++), von Abgabepunkt 2 gut (+) und von Abgabepunkt 3 mäßig (0). Beaconsignale der Abgabevorrichtungen von Abgabepunkten 4, 5 und 6 sind von den Abgabeanordnungen abgeschattet für ein mobiles Endgerät, das sich an Abgabepunkt 1 befindet, daher wird die Empfangsqualität mit mäßig (0) bis schlecht (-) eingestuft. Gleiches gilt für Signale, die von den Abgabevorrichtungen der Abgabepunkte 7, 10, 11 und 12 kommen. Möglicherweise sind Beaconsignale von den Abgabevorrichtungen der Abgabepunkte 7 bis 12 nicht mehr empfangbar ( ) für ein mobiles Endgerät, das sich an Abgabepunkte 1 befindet aufgrund von Abschattung und Distanz sowie der gewählten Sendestärke der BLE Beacons.

Es versteht sich hierbei, dass Tabelle 1 insofern idealisiert ist, als in Wirklichkeit die Zuordnung des Standorts eines mobilen Endgeräts auf dem Forecourt zu der Empfangsqualität von weiteren Signalabschirmungen und Reflexionen beeinflusst wird, die unter anderem begründet sind von Aufbauten am Forecourt (z.B. Stahlsäulen, die eine Forecourt-Überdachung tragen) und von Fahrzeugen auf dem Forecourt. Für einen realen Forecourt kann es erforderlich sein, eine Zuordnung zwischen Standort und Empfangsqualität von Beaconsignalen einzumessen.

Mit Blick auf die Figur 4 kann zu einem ersten Zeitpunkt T1 das Fahrzeug 460 mit dem mobilen Endgerät 442 an Bord an den Abgabepunkt 1 fahren. Da gemäß der Tabelle 1 im Wesentlichen nur die Beaconsignale der Abgabepunkte 1, 2 und 3 (bzw. 424.1, 424.2, 424.3) relevant sind, insbesondere, wenn die Anzahl der Beacons limitiert ist (z.B. Top-3), deren Informationen in einem Endgerätedatensatz übermittelten werden, wird im Nachfolgenden im Wesentlichen auf diese Abgabepunkte 1, 2 und 3 abgestellt. Für ein mobiles Endgerät 442, das sich am Abgabepunkt 1 befindet, wird nun die zeitliche Entwicklung der jeweiligen vorläufigen Zuordnungswahrscheinlichkeit des mobilen Endgeräts 442 zu den Abgabepunkten 1 - 3 im Laufe des Abgabevorvorgangs beschrieben auf Grundlage der entsprechend zu den Zeitpunkten T1 bis T7 vorliegenden Endgerätedatensätze und Abgabepunktzustandsdatensätze bzw. Datensatzgruppen.

Zum Zeitpunkt T1 (Figur 4) hat das mobile Endgerät 442 Beaconsignale in unterschiedlichen Signalstärken von den Abgabevorrichtungen der Abgabepunkte 1 - 3 empfangen. Beispielhaft werden folgende Daten angenommen und beispielhaft folgende vorläufige Zuordnungswahrscheinlichkeiten bestimmt:

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score | 87 | 90 | 91 | 91 | 50 | 47 | 49 | 52 | 25 | 23 | 24 | 26 |
| Zustandsdaten | Frei | | | | Frei | | | | Frei | | | |
| Vorl. Zuordnungsw. Des mobilen Endgeräts (T1) | 55% | | | | 30% | | | | 15% | | | |

Die Werte der bestimmten Entfernungsdaten in Form von Signal-Scores sind dabei beispielhaft gewählte Größen. Zu beachten ist, dass die durch ein mobiles Endgerät empfangene Signalstärke physikalisch im Quadrat der Entfernung zum Beacon abnimmt, und auf der physikalischen Signalstärke der Signal-Score basiert, wie oben erläutert wurde. Dies wird in etwa repräsentiert durch das Verhältnis der empfangenen vier Beacon-Signalstärken von AP1 (nahe am mobilen Endgerät 442) zu den empfangenen vier Beacon-Signalstärken von AP 2 (weiter entfernt vom mobilen Endgerät 442) und zu den empfangenen vier Beacon-Signalstärken von AP 3 (nochmals weiter entfernt vom mobilen Endgerät 442. Die bestimmten ersten vorläufigen (ersten, zweiten und dritten) Zuordnungswahrscheinlichkeiten über eine Zuordnung der jeweiligen Abgabepunkte 1, 2 und 3 zu dem ersten mobilen Endgerät 442 kann proportional berechnet werden zum Mittelwert der von den zugehörigen Abgabevorrichtungen empfangenen Signalstärken (insbesondere RSSI).

Zum Zeitpunkt T2 ist der Nutzer 462 ausgestiegen und entnimmt an Abgabepunkt 1 die zweite Abgabevorrichtung 1.2 mit dem Kraftstoff E5. Der Nutzer 462 trägt das mobile Endgerät 442 bei sich, zum Beispiel in einer Jacken- oder Hosentasche. Beim Entnehmen einer Abgabevorrichtung 1.2 aus dem Abgabepunkt 1 befinden sich der Nutzer 462 und sein mobiles Endgerät 442 in der Nähe der Abgabevorrichtungen von Abgabepunkt 1, insbesondere in der Nähe der entnommenen Abgabevorrichtung 1.2. Das mobile Endgerät 442 generiert insbesondere periodisch Endgerätedatensätze mit den Beaconkennungen und Beacon-Signalstärkedaten (RSSI) der am nächsten gelegenen Beacons. Ist beispielsweise festgelegt, dass nur die drei Beacons mit höchster Signalstärke betrachtet werden, handelt es sich vermutlich um drei der Beacons an Abgabepunkt 1, wovon einer der Beacons zur entnommenen Abgabevorrichtung 1.2 gehört.

Weiter kann beim Auswerten durch das Hintergrundsystem festgestellt werden, dass das mobile Endgerät 442 wiederholt Beaconsignale in der größten Signalstärke von einer Abgabevorrichtung des Abgabepunkts 1 empfängt, nämlich von Abgabevorrichtung 1.2.

Der aktuelle Wert für die zweiten vorläufigen (ersten, zweiten und dritten) Zuordnungswahrscheinlichkeiten der Abgabepunkte1 bis 3 zum mobilen Endgerät 442 wird beispielhaft berechnet aus dem Verhältnis der aktuell dem mobilen Endgerät 442 zugeordneten Signal-Scores (wie im ersten Schritt) plus einem vordefinierten Erhöhungsfaktor (auch als Vertrauenszuschlag bezeichnet), der dem wahrscheinlichsten so berechneten Abgabepunkt (bzw. der höchsten (vorläufigen) Zuordnungswahrscheinlichkeit) zugeschlagen wird, wenn er derselbe wahrscheinlichste Abgabepunkt ist wie im letzten abgeschlossenen Berechnungsschritt. Damit ergibt sich für die Gesamtheit aller Abgabepunkte als Zwischenergebnis eine Summe von zweiten vorläufigen Zuordnungswahrscheinlichkeiten, die um den Betrag des Erhöhungsfaktors größer ist als 100%. Die einzelnen vorläufigen Zuordnungswahrscheinlichkeiten der Abgabepunkte können aus diesem Grund nun um einen gemeinsamen Faktor herunterskaliert werden, so dass die Summe aller vorläufigen Zuordnungswahrscheinlichkeiten aller Abgabepunkte wieder 100% ergibt.

Der Erhöhungsfaktor des Bestimmungsverfahrens erhöht also die Zuordnungswahrscheinlichkeit eines Abgabepunkts zum mobilen Endgerät 442, wenn insbesondere anhand der Beacon-Signalstärke wiederholt derselbe Abgabepunkt als der wahrscheinlichste verwendete Abgabepunkt bestimmt wird. Für den Zeitpunkt T2 ergeben sich damit folgende beispielhafte zweite vorläufige Zuordnungswahrscheinlichkeiten:

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score | 92 | 105 | 90 | 87 | 51 | 48 | 50 | 51 | 26 | 24 | 25 | 26 |
| Zustandsdaten | Entnommen | | | | Frei | | | | Frei | | | |
| Vorl. Zuordnungsw. Des mobilen Endgeräts (T2) | 66% | | | | 22% | | | | 11% | | | |

Zu den Zeitpunkten T3 bis T5 tankt der Nutzer 462 jetzt sein Fahrzeug 460 und bleibt - mit dem mobilen Endgerät 442 - an der Tanköffnung stehen, also in unmittelbarer Nähe des Beacons, das in der verwendeten Abgabevorrichtung 1.2 eingebaut ist und periodisch Beaconsignale aussendet. Beispielhaft empfängt das mobile Endgerät 442 währenddessen zum Zeitpunkt T5 weiterhin die stärksten Beaconsignale von Beacons des Abgabepunkts 1, insbesondere des Beacons der Abgabevorrichtung 1.2. Die dritten, vierten und fünften vorläufigen Zuordnungswahrscheinlichkeit für Abgabepunkt 1 steigt weiter, insbesondere durch den Erhöhungsfaktor:

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score | 87 | 102 | 89 | 85 | 52 | 49 | 48 | 51 | 28 | 22 | 24 | 23 |
| Zustandsdaten | Tankt | | | | Frei | | | | Frei | | | |
| Vorl. Zuordnungsw. Des mobilen Endgeräts (T3) | 73% | | | | 18% | | | | 9% | | | |
| Vorl. Zuordnungsw. Des mobilen Endgeräts (T4) | 78% | | | | 15% | | | | 7% | | | |
| Vorl. Zuordnungsw. Des mobilen Endgeräts (T5) | 81% | | | | 13% | | | | 6% | | | |

Zum Zeitpunkt T6 hat der Nutzer 462 die Abgabevorrichtung 1.2 aus der Tanköffnung entnommen und geht - mit dem mobilen Endgerät 442 und der Abgabevorrichtung - zurück zum Abgabepunkt 1, um die Abgabevorrichtung 1.2 dort einzustecken und damit den Tankvorgang zu beenden. Beispielhaft empfängt das mobile Endgerät 442 währenddessen zum Zeitpunkt T6 weiterhin die stärksten Beaconsignale von Beacons des Abgabepunkts 1, insbesondere des Beacons der Abgabevorrichtung 1.2. Die sechste vorläufige Zuordnungswahrscheinlichkeit für Abgabepunkt 1 steigt weiter, insbesondere durch den Erhöhungsfaktor.

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score | 95 | 105 | 78 | 75 | 51 | 48 | 50 | 51 | 26 | 24 | 25 | 26 |
| Zustandsdaten | Tankt | | | | Frei | | | | Frei | | | |
| Vorl. Zuordnungsw. Des mobilen Endgeräts (T6) | 84% | | | | 10% | | | | 6% | | | |

Der Nutzer 462 steckt die Abgabevorrichtung 1.2 in ihre Aufnahme am Abgabepunkt 1. Beispielhaft empfängt das mobile Endgerät 442 währenddessen zum Zeitpunkt T6 weiterhin insbesondere Beaconsignale von dem Abgabepunkt 1. Die (finale) erste Zuordnungswahrscheinlichkeit für eine Zuordnung des ersten Abgabepunkts 1 zu dem mobilen Endgerät steigt nochmals weiter, insbesondere durch den Erhöhungsfaktor.

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score | 94 | 105 | 92 | 86 | 51 | 48 | 50 | 51 | 26 | 24 | 25 | 26 |
| Zustandsdaten | Eingehängt, Zahlung erwartet | | | | Frei | | | | Frei | | | |
| Zuordnungsw. Des mobilen Endgeräts (T7) | 100% | | | | 0% | | | | 0% | | | |

Wie sich aus den vorherigen Tabellen ergibt, hat das Hintergrundsystem Abgabepunktzustandsdatensätze für die Zeitpunkte T1 bis T7 mit den genannten jeweiligen Zustandsdaten der drei Abgabepunkte 1- 3 empfangen. Aus diesen ergibt sich unter anderem, dass insbesondere kein weiterer Abgabevorgang stattgefunden hat. Basierend auf den Daten der ersten bis siebten Datensatzgruppen kann insbesondere die erste Zuordnungswahrscheinlichkeit (100 %), die zweite Zuordnungswahrscheinlichkeit (0 %) und die dritte Zuordnungswahrscheinlichkeit (0%) bestimmt werden. Ein Auswerten dieser Zuordnungswahrscheinlichkeiten führt insbesondere zu der Zuordnung des ersten Abgabepunkts 1 (bzw. des entsprechenden Abgabevorgangs) zu dem mobilen Endgerät 442.

Das mobile Endgerät 442 bzw. das zu dem mobilen Endgerät 442 hinterlegte Nutzerkonto kann nun für die Zahlung des Abgabevorgangs herangezogen werden. Aus Gründen der Nutzersicherheit oder bei Zuordnungswahrscheinlichkeiten, die unterhalb eines vordefinierten Schwellwerts bleiben, kann dem Nutzer 462 des mobilen Endgeräts 442 eine Benachrichtigung gesendet werden, die er beispielsweise bestätigen muss, damit wirksam eine Zahlung ausgelöst werden kann, beispielsweise: "Haben Sie gerade an Abgabepunkt 1 eine Menge von 47,81 Litern E5 für 95,04 € getankt und möchten Sie diesen Betrag jetzt zahlen?"

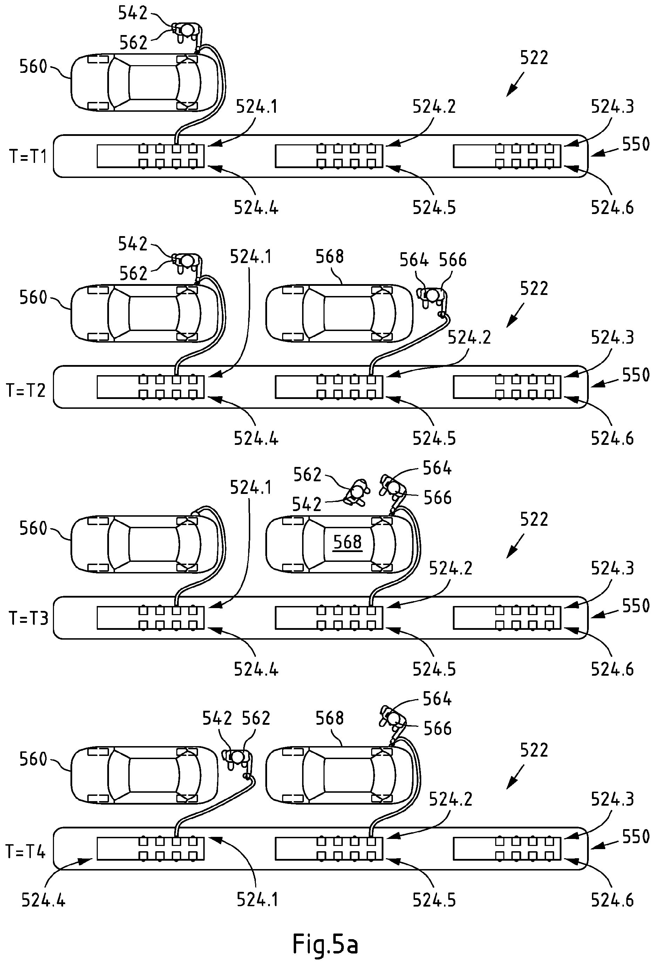

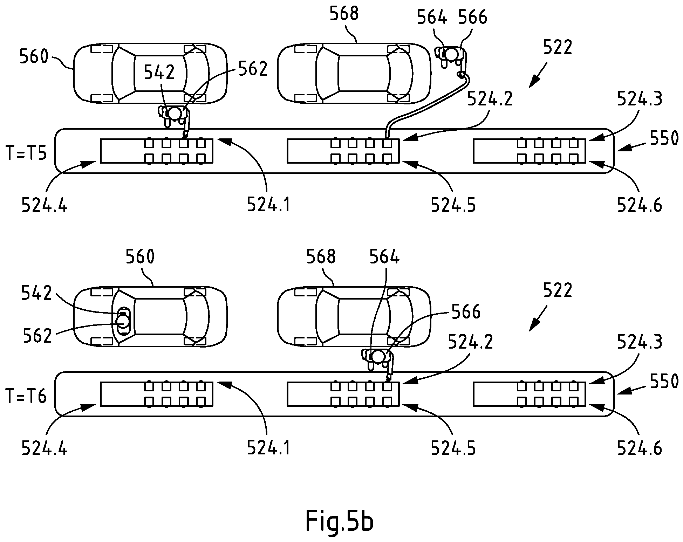

Die Figur 5 zeigt ein ähnliches Anwendungsbeispiel wie die Figur 4, so dass zur Vermeidung von Wiederholungen auch auf die vorherigen Ausführungen verwiesen wird.

Das Anwendungsbeispiel findet an einer Tankstelle 550 statt. Auch in diesem Fall werden der Übersicht halber nur die Abgabepunkte 1 bis 3 mit den zugehörigen Abgabevorrichtungen betrachtet. Hier tankt zum Zeitpunkt T1 ein erster Nutzer 562 eines ersten mobilen Endgeräts 542, beispielhaft eine Smartwatch, sein Fahrzeug 560 mit Abgabevorrichtung 1.2 an Abgabepunkt 1. Ein zweiter Nutzer 566 eines zweiten mobilen Endgeräts 564, bespielhaft ein Smartphone, beginnt zum Zeitpunkt T2 einen Abgabevorgang mit Abgabevorrichtung 2.1 des Abgabepunkts 2 für sein Fahrzeug 568. Beide Nutzer 562, 566 tragen ihre mobilen Endgeräte 542, 564 mit sich. Die beiden Nutzer 562, 566 kennen sich, und der erste Nutzer 562 (mit mobilem Endgerät 542) geht hinüber zum zweiten Fahrzeug 568, um mit dem zweiten Nutzer 566 ein Gespräch zu führen. Währenddessen (vgl. Zeitpunkt T3) wird das erste Fahrzeug 560 weiter aus Abgabevorrichtung 1.2 betankt, während der zugehörige erste Nutzer 562 mit seinem mobilen Endgerät 542 in der Nähe der Abgabevorrichtung 2.1 des zweiten Nutzers 566 verweilt. Zum Zeitpunkt T4 entnimmt der erste Nutzer 562 die Abgabevorrichtung 1.2 aus der Tanköffnung seines Fahrzeugs 560.

Zum Zeitpunkt 5 hängt der erste Nutzer 562 seine Abgabevorrichtung 1.2 ein. Der Abgabevorgang an Abgabepunkt 1 ist damit abgeschlossen, und die finalen Zuordnungswahrscheinlichkeiten insbesondere des Abgabepunkts 1 können bestimmt werden. Insbesondere kann die finale Zuordnungswahrscheinlichkeit der Abgabevorrichtung 1.2 zum ersten Nutzer 562 mit dem mobilen Endgerät 542 erhöht werden, wenn das mobile Endgerät 542 beim Entnehmen und beim Einhängen (Zeitpunkt T5) der Abgabevorrichtung 1.2 den höchsten Signal-Score vom Beacon der Abgabevorrichtung 1.2 empfangen hat (also die größte Nähe zwischen Beacon und mobilem Endgerät jeweils beim Entnehmen und Einhängen festgestellt wird.) Nach dem zuvor beschriebenen erfindungsgemäßen Verfahren ergeben sich für nun zwei mobile Endgeräte 542 und 564 zum Zeitpunkt T5 folgende finalen bzw. vorläufige Zuordnungswahrscheinlichkeiten:

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score (erstes Endgerät) | 93 | 106 | 93 | 85 | 35 | 30 | 27 | 27 | 26 | 24 | 25 | 25 |
| Signal-Score (zweites Endgerät) | 46 | 48 | 50 | 47 | 99 | 52 | 47 | 49 | 48 | 52 | 46 | 50 |
| Zustandsdaten | Eingehängt, Zahlung erwartet | | | | Tankt | | | | Frei | | | |
| Zuordnungsw. Des ersten mobilen Endgeräts (T5) | 60% | | | | 25% | | | | 15% | | | |
| Vorl. Zuordnungsw. Des zweiten mobilen Endgeräts (T5) | 0% | | | | 89% | | | | 11% | | | |

Zum Zeitpunkt T5 ist dem Abgabepunkt 1 mit einer Zuordnungswahrscheinlichkeit von 60 % das erste mobile Endgerät 542 zugeordnet und zu 0% das zweite mobile Endgerät 564 (denn Abgabepunkt 1 war schon belegt, als Endgerät 564 auf dem Forecourt der Tankstelle 550 des Energieabgabesystems 522 erschien (vgl. Zeitpunkt T2)). Dabei ist noch nicht die Kreuzbeziehung berücksichtigt, dass nämlich Endgerät 564 gleichzeitig zum Abgabepunkt 2 mit einer vorläufigen Zuordnungswahrscheinlichkeit von 89% zugeordnet ist.

Da Abgabepunkt 3 vernachlässigbare Zuordnungswahrscheinlichkeiten hat und Abgabepunkt 2 mit sehr hoher Zuordnungswahrscheinlichkeit dem zweiten mobilen Endgerät 564 zugeordnet ist, ist die (finale) erste Zuordnungswahrscheinlichkeit von 60% zwischen Zapfpunkt 1 und erstem Endgerät 542 hinreichend gut, um daraus zu schließen, dass der abgeschlossene Abgabevorgang an Abgabepunkt 1 dem ersten mobilen Endgerät 542 zugeordnet werden kann.

Das abschließende Zuordnen des zweiten Abgabevorgangs bzw. des zweiten Abgabepunkts 2 zum Zeitpunkt T6 ist damit ebenfalls sehr eindeutig. Beim Einhängen von Abgabevorrichtung 2.1 ist dem Abgabepunkt 2 das zweite Endgerät 564 mit 89 % (finaler) Zuordnungswahrscheinlichkeit zugeordnet. Insbesondere kann auch hier die finale Zuordnungswahrscheinlichkeit der Abgabevorrichtung 2.1 zum zweiten Nutzer 566 mit dem mobilen Endgerät 564 erhöht werden, wenn das mobile Endgerät 564 beim Entnehmen und beim Einhängen (Zeitpunkt T6) der Abgabevorrichtung 2.1 den höchsten Signal-Score vom Beacon der Abgabevorrichtung 2.1 empfangen hat.

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score (zweites Endgerät) | 27 | 28 | 30 | 35 | 104 | 94 | 93 | 85 | 49 | 53 | 47 | 51 |
| Zustandsdaten | Frei | | | | Eingehängt, Zahlung erwartet | | | | Frei | | | |
| Zuordnungsw. Des zweiten mobilen Endgeräts (T6) | 0% | | | | 89% | | | | 11% | | | |

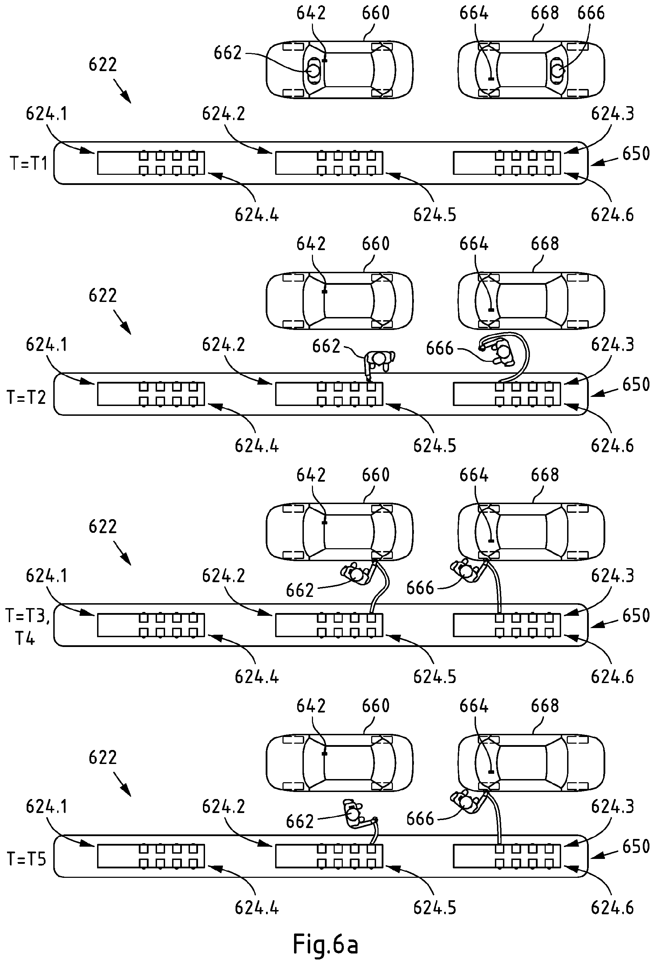

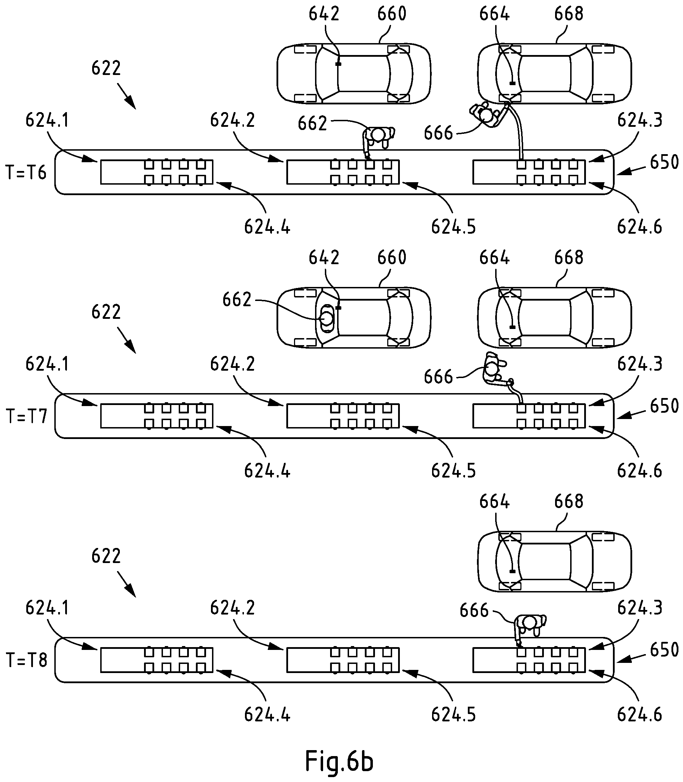

Die Figur 6 zeigt ein ähnliches Anwendungsbeispiel wie die Figuren 4 und 5, so dass zur Vermeidung von Wiederholungen auch auf die vorherigen Ausführungen verwiesen wird.

Das Anwendungsbeispiel findet an einer Tankstelle 650 statt. Auch in diesem Fall werden der Übersicht halber nur die Abgabepunkte 1 bis 3 mit den zugehörigen Abgabevorrichtungen betrachtet. Hier verbleiben die mobilen Endgeräte 642 und 664, beispielhaft hier jeweils Smartphones, während der Abgabevorgänge in den Fahrzeugen 660, 668, wobei als zusätzliche Komplikation das zweite Endgerät 664 etwa gleich weit entfernt positioniert ist von den Aufnahmen des Abgabepunkts 2 und von den Aufnahmen des Abgabepunkts 3. Das zweite Endgerät B empfängt also in der Ausgangssituation T1 die Beaconsignale von den Abgabevorrichtungen beider Abgabepunkte 2 und 3 etwa gleich stark.

Zu einem Zeitpunkt T2 ist der erste Nutzer 662 (der Nutzer 662 des ersten mobilen Endgeräts 642) dabei, die Abgabevorrichtung 2.1 des Abgabepunkts 1 zu entnehmen, während der zweite Nutzer 666 (der Nutzer 666 des zweiten mobilen Endgeräts 664) bereits die Abgabevorrichtung 3.4 des Abgabepunkts 3 entnommen hat und damit auf die Tanköffnung seines Fahrzeugs 668 zugeht.

Zu den Zeitpunkten T3, T4 wird das Fahrzeug 660 des ersten Nutzers 662 mit Abgabevorrichtung 2.1 des Abgabepunkts 2 betankt und das Fahrzeug 668 des zweiten Nutzers 666 mit Abgabevorrichtung 3.4 des Abgabepunkts 3.

Zum Zeitpunkt T5 hat der erste Nutzer 662 die Abgabevorrichtung 2.1 aus der Tanköffnung entnommen und ist dabei, sie in die Abgabevorrichtungsaufnahme an Abgabepunkt 2 zurückzustecken; das Fahrzeug 668 des zweiten Nutzers 666 wird weiter mit Abgabevorrichtung 3.4 betankt.

Zum Zeitpunkt T6 hat der erste Nutzer 662 die Abgabevorrichtung 2.1 in die Abgabevorrichtungsaufnahme an Abgabepunkt 2 zurückgesteckt; das Fahrzeug 668 des zweiten Nutzers 666 wird weiter mit Abgabevorrichtung 3.4 betankt. Der Abgabevorgang an Abgabepunkt 2 ist damit abgeschlossen, und das Hintergrundsystem bestimmt nun erfindungsgemäß insbesondere die finale Zuordnungswahrscheinlichkeit des Abgabepunkts 2 zu einem mobilen Endgerät 642, 664 bestimmen.

Nach dem zuvor beschriebenen erfindungsgemäßen Verfahren ergibt sich insbesondere für den Abgabepunkt 2, der nun abzurechnen ist, eine zweite Zuordnungswahrscheinlichkeit von 80% zum ersten mobilen Endgerät 642 und von 22% zum zweiten mobilen Endgerät 664:

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score (erstes Endgerät) | 24 | 25 | 24 | 26 | 71 | 70 | 68 | 69 | 47 | 23 | 20 | 21 |
| Signal-Score (zweites Endgerät) | 18 | 20 | 19 | 21 | 48 | 48 | 50 | 57 | 81 | 48 | 50 | 48 |
| Zustandsdaten | Frei | | | | Eingehängt, Zahlung erwartet | | | | Tankt | | | |
| Zuordnungsw. Des ersten mobilen Endgeräts (T6) | 7% | | | | 80% | | | | 13% | | | |
| Vorl. Zuordnungsw. Des zweiten mobilen Endgeräts (T6) | 7% | | | | 22% | | | | 71% | | | |

Das abschließende Zuordnen des zweiten Abgabevorgangs zum Zeitpunkt T7 ist damit sehr eindeutig. Beim Einhängen von Abgabevorrichtung 3.4 ist dem Abgabepunkt 3 das zweite mobile Endgerät 664 mit 76 % vorläufiger Zuordnungswahrscheinlichkeit zugeordnet.

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score (zweites Endgerät) | 18 | 20 | 19 | 21 | 48 | 48 | 50 | 57 | 63 | 50 | 49 | 48 |
| Zustandsdaten | Frei | | | | Frei | | | | Eingehängt, Zahlung erwartet | | | |
| Zuordnungsw. Des zweiten mobilen Endgeräts (T7) | 24% | | | | 0% | | | | 76% | | | |

Zu einem Zeitpunkt T8 kann aus den Zustandsdaten die Information abgeleitet werden, dass im Ablauf der Zeitpunkte T1 bis T7 kein weiterer unbezahlter Abgabevorgang auf der Tankstelle 650 des Energieabgabesystems 622 stattgefunden hat. Das Hintergrundsystem kann als den Abgabevorgang an Abgabepunkt 3 mit 100% finaler Zuordnungswahrscheinlichkeit dem zweiten mobilen Endgerät 664 zuordnen.

| Abgabepunkt | **AP 1** | | | | **AP 2** | | | | **AP 3** | | | |
|---|---|---|---|---|---|---|---|---|---|---|---|---|
| Abgabevorrichtung | **1.1** | **1.2** | **1.3** | **1.4** | **2.1** | **2.2** | **2.3** | **2.4** | **3.1** | **3.2** | **3.3** | **3.4** |
| Kraftstoff | **E10** | **E5** | **SP** | **D** | **E10** | **E5** | **SP** | **D** | **E10** | **E5** | **SP** | **D** |
| Signal-Score (zweites Endgerät) | 17 | 21 | 18 | 22 | 49 | 47 | 51 | 56 | 61 | 51 | 48 | 49 |
| Zustandsdaten | Frei | | | | Frei | | | | Eingehängt, Zahlung erwartet | | | |
| Zuordnungsw. Des zweiten mobilen Endgeräts (T8) | 0% | | | | 0% | | | | 100% | | | |

### Bezugszeichenliste:

- 100: Hintergrundsystem
- 102: Datenverarbeitungsvorrichtung
- 104: erstes Empfangsmodul
- 106: zweites Empfangsmodul
- 108: Gruppierungsmodul
- 110: Bestimmungsmodul
- 112: Zuordnungsmodul
- 114: erste Hardwareschnittstelle
- 116: zweite Hardwareschnittstelle
- 118: Computerprogramm
- 200: Hintergrundsystem
- 202: Datenverarbeitungsvorrichtung
- 204: erstes Empfangsmodul
- 206: zweites Empfangsmodul
- 208: Gruppierungsmodul
- 212: Zuordnungsmodul
- 214: erste Hardwareschnittstelle
- 216: zweite Hardwareschnittstelle
- 218: Computerprogramm
- 222: Energieabgabesystem
- 224: Abgabepunkte
- 226: Abgabevorrichtungen
- 228: Basis
- 230: Zapfpistolenaufnahme
- 232: Sensor
- 234: Sensor
- 236: Kommunikationsmodul
- 238: Tankstellensteuerung
- 240: Beacons
- 242: mobiles Endgerät
- 244: Empfangsschnittstelle
- 246: Energieabgabeanwendung
- 248: Schnittstelle
- 250: Tankstelle
- 252: Schlauch
- 254: Kommunikationsnetz
- 256: Kommunikationsnetz
- 258: Kommunikationsnetz
- 422: Energieabgabesystem
- 424: Abgabepunkte
- 442: mobiles Endgerät
- 450: Tankstelle
- 460: Fahrzeug
- 462: Nutzer
- 522: Energieabgabesystem
- 542: erstes mobiles Endgerät
- 550: Tankstelle
- 560: erstes Fahrzeug
- 562: erste Nutzer
- 564: zweites mobiles Endgerät
- 566: zweiter Nutzer
- 568: zweites Fahrzeug
- 622: Energieabgabesystem
- 642: erstes mobiles Endgerät
- 650: Tankstelle
- 660: erstes Fahrzeug
- 662: erster Nutzer
- 664: zweites mobiles Endgerät
- 666: zweiter Nutzer
- 668: zweites Fahrzeug

## Patentansprüche

1. Verfahren zum Betreiben eines Energieabgabesystems (222, 422, 522, 622) mit einer Tankstelle (250, 450, 550, 650), umfassend zumindest einen ersten Abgabepunkt (224.1, 424.1, 524.1, 624.1) und einen zweiten Abgabepunkt (224.2, 424.2, 524.2, 624.2), wobei der erste Abgabepunkt (224.1, 424.1, 524.1, 624.1) mindestens eine erste Abgabevorrichtung (226.1) mit einem ersten Beacon (240.1) umfasst und der zweite Abgabepunkt (224.2, 424.2, 524.2, 624.2) mindestens eine zweite Abgabevorrichtung (226.3) mit einem zweiten Beacon (240.3) umfasst, das Verfahren umfassend:
- wiederholendes Empfangen, durch ein erstes Empfangsmodul (104, 204) eines Hintergrundsystems (100, 200) des Energieabgabesystems (222, 422, 522, 622), zeitabhängiger Endgerätedatensätze von einem ersten mobilen Endgerät (242, 442, 542, 642),
- wobei jeder zeitabhängige Endgerätedatensatz zumindest enthält: eine Endgerätekennung des ersten mobilen Endgeräts (242, 442, 542, 642), eine erste Beaconkennung des ersten Beacons (240.1), eine zweite Beaconkennung des zweiten Beacons (240.3), ein erstes Beacon-Signalstärkedatum eines durch das mobile Endgerät empfangenen ersten Beaconsignals des ersten Beacons (240.1), ein zweites Beacon-Signalstärkedatum eines zweiten durch das mobile Endgerät empfangenen Beaconsignals des zweiten Beacons (240.3) und ein Empfangszeitdatum,
- wiederholendes Empfangen, durch ein zweites Empfangsmodul (106, 206) des Hintergrundsystems (100, 200), zeitabhängiger Abgabepunktdatensätze des ersten Abgabepunkts (224.1, 424.1, 524.1, 624.1) und des zweiten Abgabepunkts (224.2, 424.2, 524.2, 624.2),
- wobei jeder zeitabhängige Abgabepunktdatensatz zumindest enthält:
- ein Zustandserfassungszeitdatum und wenigstens eines von
- einem erstem Zustandsdatum des ersten Abgabepunkts (224.1, 424.1, 524.1, 624.1) zusammen mit einer ersten Abgabepunktkennung des ersten Abgabepunkts (224.1, 424.1, 524.1, 624.1) und
- einem zweitem Zustandsdatum des zweiten Abgabepunkts (224.2, 424.2, 524.2, 624.2) zusammen mit zweiten Abgabepunktkennung des zweiten Abgabepunkts (224.2, 424.2, 524.2, 624.2),
- zeit-, zähler- und/oder anlassgesteuertes Bilden, durch ein Gruppierungsmodul (108, 208) des Hintergrundsystems (100, 200), von Datensatzgruppen aus den empfangenen Abgabepunkdatensätzen und Endgerätedatensätze,
- Bestimmen, durch ein Bestimmungsmodul (110, 210) des Hintergrundsystems (100, 200), zumindest einer ersten Zuordnungswahrscheinlichkeit über eine Zuordnung des ersten Abgabepunkts (224.1, 424.1, 524.1, 624.1) zu dem ersten mobilen Endgerät (242, 442, 542, 642) und einer zweiten Zuordnungswahrscheinlichkeit über eine Zuordnung des zweiten Abgabepunkts (224.2, 424.2, 524.2, 624.2) zu dem ersten mobilen Endgerät (242, 442, 542, 642), basierend auf den Daten der gebildeten Datensatzgruppen, und
- Zuordnen, durch ein Zuordnungsmodul (112, 212) des Hintergrundsystems (100, 200), des ersten Abgabepunkts (224.1, 424.1, 524.1, 624.1) oder des zweiten Abgabepunkts (224.2, 424.2, 524.2, 624.2) zu dem ersten mobilen Endgerät (224.2, 424.2, 524.2, 624.2), zumindest basierend auf einem Auswerten der ersten Zuordnungswahrscheinlichkeit und der zweiten Zuordnungswahrscheinlichkeit.

2. Verfahren nach Anspruch 1, **dadurch gekennzeichnet, dass** das Bestimmen der ersten Zuordnungswahrscheinlichkeit und der zweiten Zuordnungswahrscheinlichkeit ferner umfasst:
- Bestimmen, durch das Bestimmungsmodul (110, 210), einer ersten vorläufigen ersten Zuordnungswahrscheinlichkeit und einer ersten vorläufigen zweiten Zuordnungswahrscheinlichkeit, basierend auf den Daten einer ersten Datensatzgruppe,
- Bestimmen, durch das Bestimmungsmodul (110, 210) des Hintergrundsystems (100, 200), einer zweiten vorläufigen ersten Zuordnungswahrscheinlichkeit und einer zweiten vorläufigen zweiten Zuordnungswahrscheinlichkeit, basierend auf den Daten einer zweiten Datensatzgruppe, und
- Bestimmen der ersten Zuordnungswahrscheinlichkeit und der zweiten Zuordnungswahrscheinlichkeit, basierend auf den bestimmten vorläufigen ersten Zuordnungswahrscheinlichkeiten und den bestimmten vorläufigen zweiten Zuordnungswahrscheinlichkeiten.

3. Verfahren nach einem der vorherigen Ansprüche, **dadurch gekennzeichnet, dass**
- bei einem zweiten mobilen Endgerät (564, 664) für jedes der zumindest zwei mobilen Endgeräte (242, 442, 542, 564, 642, 664) jeweils zumindest eine erste Zuordnungswahrscheinlichkeit und eine zweite Zuordnungswahrscheinlichkeit bestimmt wird,
- wobei das Zuordnen des ersten Abgabepunkts (224.1, 424.1, 524.1, 624.1) oder des zweiten Abgabepunkts (224.2, 424.2, 524.2, 624.2) zu dem ersten mobilen Endgerät (242, 442, 542, 642) oder dem zweiten mobilen Endgerät (564, 664) zumindest basiert auf einem Auswerten der bestimmten ersten Zuordnungswahrscheinlichkeiten und der bestimmten zweiten Zuordnungswahrscheinlichkeiten.

4. Verfahren nach einem der vorherigen Ansprüche, **dadurch gekennzeichnet, dass**
- das Auswerten zumindest der ersten Zuordnungswahrscheinlichkeit und der zweiten Zuordnungswahrscheinlichkeit umfasst: ein Bestimmen der höchsten Zuordnungswahrscheinlichkeit aus der ersten Zuordnungswahrscheinlichkeit und der zweiten Zuordnungswahrscheinlichkeit.

5. Verfahren nach Anspruch 2 und 4, **dadurch gekennzeichnet, dass** das Auswerten zumindest der ersten Zuordnungswahrscheinlichkeit und der zweiten Zuordnungswahrscheinlichkeit ferner umfasst:
- Bestimmen einer höchsten ersten vorläufigen Zuordnungswahrscheinlichkeit aus der ersten vorläufigen ersten Zuordnungswahrscheinlichkeit und der ersten vorläufigen zweiten Zuordnungswahrscheinlichkeit,
- Bestimmen einer höchsten zweiten vorläufigen Zuordnungswahrscheinlichkeit aus der zweiten vorläufigen ersten Zuordnungswahrscheinlichkeit und der zweiten vorläufigen zweiten Zuordnungswahrscheinlichkeit, und
- bei einem Feststellen, dass bei der bestimmten höchsten ersten vorläufigen Zuordnungswahrscheinlichkeit und bei der bestimmten höchsten zweiten vorläufigen Zuordnungswahrscheinlichkeit jeweils derselbe Abgabepunkt dem ersten mobilen Endgerät (242, 442, 542, 642) zugordnet ist, Erhöhen der bestimmten höchsten Zuordnungswahrscheinlichkeit insbesondere um einen vordefinierten Erhöhungsfaktor.

6. Verfahren nach einem der vorherigen Ansprüche, **dadurch gekennzeichnet, dass** das Verfahren ferner umfasst:
- wiederholendes Empfangen, durch das erste mobile Endgerät (242, 442, 542, 642), des ersten Beaconsignals und des zweiten Beaconsignals und
- Bestimmen, durch das erste mobile Endgerät (242, 442, 542, 642), für jedes der empfangenen ersten Beaconsignale eines jeweiligen ersten Beacon-Signalstärkedatums und für jedes der empfangenen zweiten Beaconsignale eines jeweiligen zweiten Beacon-Signalstärkedatums.

7. Verfahren nach Anspruch 6, **dadurch gekennzeichnet, dass** das Bestimmen eines Beacon-Signalstärkedatums ein Bestimmen einer Signalstärke des empfangenen Beaconsignals umfasst, und das Verfahren ferner umfasst:
- Bestimmen, durch das erste mobile Endgerät (242, 442, 542, 642), ob eine bestimmte Signalstärke des empfangenen Beaconsignals einen vordefinierten Mindestsignalstärkewert überschreitet, und
- Hinzufügen der Beaconkennung des empfangenen Beaconsignals zusammen mit dem für dieses Beaconsignal bestimmten Beacon-Signalstärkedatum zu dem zeitabhängigen Endgerätedatensatz nur dann, wenn die bestimmte Signalstärke des Beaconsignals den vordefinierten Mindestsignalstärkewert überschreitet, und/oder
- Bestimmen einer Anzahl an empfangenen ersten Beaconsignalen anhand der Beaconkennung während eines vordefinierten Zeitfensters, und
- Hinzufügen der ersten Beaconkennung zusammen mit dem für dieses Beaconsignal bestimmten Beacon-Signalstärkedatum zu dem zeitabhängigen Endgerätedatensatz nur dann, wenn die bestimmte Anzahl an empfangenen Beaconsignalen eine vordefinierte Mindestanzahl überschreitet,
und/oder
- Bestimmen, ob eine bestimmte Signalstärke eines Beaconsignals einer Mehrzahl von empfangenen unterschiedlichen Beaconsignalen unterschiedlicher Beacons unter den N-höchsten Signalstärken der empfangenen unterschiedlichen Beaconsignalen ist, wobei N vordefiniert ist, und
- Hinzufügen der Beaconkennung des Beaconsignals zusammen mit dem für dieses Beaconsignal bestimmten Beacon-Signalstärkedatum zu dem zeitabhängigen Endgerätedatensatz nur dann, wenn die bestimmte Signalstärke des Beaconsignals unter den N-höchsten Signalstärken der empfangenen unterschiedlichen Beaconsignalen ist.

8. Verfahren nach einem der vorherigen Ansprüche, **dadurch gekennzeichnet, dass** das Auswerten der ersten Datensatzgruppe und der zweiten Datensatzgruppe ferner umfasst:
- Bestimmen zumindest eines ersten zeitabhängigen Entfernungsdatums über die Entfernung des mobilen Endgeräts (242, 442, 542, 642) zu der ersten Abgabevorrichtung, basierend auf dem ersten Beacon-Signalstärkedatum, und eines zweiten zeitabhängigen Entfernungsdatums über die Entfernung des mobilen Endgeräts (242, 442, 542, 642) zu der zweiten Abgabevorrichtung, basierend auf dem zweiten Beacon-Signalstärkedatum, und
- wobei das Bestimmen des ersten zeitabhängigen Entfernungsdatums und des zweiten zeitabhängigen Entfernungsdatums ein Bestimmen desjenigen Beacons aus dem ersten Beacon und dem zweiten Beacon umfasst, der am nächsten zu dem ersten mobilen Endgerät (242, 442, 542, 642) positioniert ist.

9. Verfahren nach einem der vorherigen Ansprüche, **dadurch gekennzeichnet, dass** das Verfahren ferner umfasst:
- Bereitstellen einer Kennungsdatenbank, enthaltend zumindest eine erste Kennungszuordnung, bei der die erste Beaconkennung der ersten Abgabepunktkennung zugeordnet ist, und eine zweite Kennungszuordnung, bei der die zweite Beaconkennung der zweiten Abgabepunktkennung zugeordnet ist,
- das Bestimmen zumindest der ersten Zuordnungswahrscheinlichkeit und der zweiten Zuordnungswahrscheinlichkeit ferner basiert auf in der Kennungsdatenbank enthaltenden Kennungszuordnungen,
und/oder
- wobei das Zuordnen des Abgabepunkts zu dem ersten mobilen Endgerät (242, 442, 542, 642) ferner basiert auf den in der Kennungsdatenbank enthaltenden Kennungszuordnungen.

10. Verfahren nach einem der vorherigen Ansprüche, **dadurch gekennzeichnet, dass**
- ein Abgabepunkt zumindest drei unterschiedliche Zustände mit entsprechend unterschiedlichen Zustandsdaten einnehmen kann,
- wobei bei einem Betriebsbereitzustandsdatum die mindestens eine Abgabevorrichtung des Abgabepunkts für ein Durchführen eines Abgabevorgangs in einem verfügbaren Zustand ist und in einer Ausgangsposition angeordnet ist,
- wobei bei einem Betriebszustandsdatum die mindestens eine Abgabevorrichtung des Abgabepunkts in einem Betriebszustand ist und in einer Betriebsposition angeordnet ist, die sich von der Ausgangsposition insbesondere unterscheidet, und
- wobei bei einem Abschlusszustandsdatum die mindestens eine Abgabevorrichtung des Abgabepunkts aufgrund eines abgeschlossenen, aber noch nicht bezahlten Abgabevorgangs in einem Endzustand ist und in der Ausgangsposition angeordnet ist.

11. Verfahren nach einem der Ansprüche 2 bis 10, **dadurch gekennzeichnet, dass** das Verfahren ferner umfasst:
- Bereitstellen einer Layout-Datenbank, enthaltend mindestens ein Tankstellen-Layout der mindestens einen Tankstelle (250, 450, 550, 650) des Energieabgabesystems (222, 422, 522, 622),
- das Bestimmen zumindest der ersten Zuordnungswahrscheinlichkeit und der zweiten Zuordnungswahrscheinlichkeit ferner basiert auf einem Auswerten des Tankstellen-Layouts.

12. . Verfahren nach einem der Ansprüche 2 bis 11, **dadurch gekennzeichnet, dass** das Verfahren ferner umfasst:
- Bereitstellen einer Nutzerdatenbank, enthaltend eine Mehrzahl von Nutzerkonten, jeweils umfassend zumindest eine Endgerätekennung des mobilen Endgeräts des jeweiligen Nutzers und eine Energieart, die bei einem Abgabevorgang des jeweiligen Nutzers verwendet wird,
- Identifizieren eines Nutzerkontos, basierend auf einem Vergleichen der empfangenen Endgerätekennung des ersten mobilen Endgeräts (242, 442, 542, 642) mit den Endgerätekennungen der Mehrzahl der Nutzerkonten, und
- das Bestimmen zumindest der ersten Zuordnungswahrscheinlichkeit und der zweiten Zuordnungswahrscheinlichkeit ferner basiert auf der bevorzugten Energieart des identifizierten Nutzerkontos.

13. Verfahren nach einem der Ansprüche 2 bis 12, **dadurch gekennzeichnet, dass**
- das Bestimmen zumindest der ersten Zuordnungswahrscheinlichkeit und der zweiten Zuordnungswahrscheinlichkeit ferner basiert auf einem Vergleichen des ersten Beacon-Signalstärkedatums der ersten Datensatzgruppe und des ersten Beacon-Signalstärkedatums der zweiten Datensatzgruppe und/oder auf einem Vergleichen des ersten Zustandsdatums der ersten Datensatzgruppe und des ersten Zustandsdatums der zweiten Datensatzgruppe.

14. Hintergrundsystem (100, 200) für ein Energieabgabesystem (222, 422, 522, 622) mit einer Tankstelle (250, 450, 550, 650), umfassend zumindest einen ersten Abgabepunkt (224.1, 424.1, 524.1, 624.1) und einen zweiten Abgabepunkt (224.2, 424.2, 524.2, 624.2), wobei der erste Abgabepunkt (224.1, 424.1, 524.1, 624.1) mindestens eine erste Abgabevorrichtung (226.1) mit einem ersten Beacon (240.1) umfasst und der zweite Abgabepunkt (224.2, 424.2, 524.2, 624.2) mindestens eine zweite Abgabevorrichtung (226.3) mit einem zweiten Beacon (240.3) umfasst, das Hintergrundsystem (100, 200) umfassend:
- ein erstes Empfangsmodul (104, 204), eingerichtet zum wiederholenden Empfangen zeitabhängiger Endgerätedatensätze von einem ersten mobilen Endgerät (242, 442, 542, 642),
- wobei jeder zeitabhängige Endgerätedatensatz zumindest enthält: eine Endgerätekennung des mobilen Endgeräts (242, 442, 542, 642), eine erste Beaconkennung des ersten Beacons (240.1), eine zweite Beaconkennung des zweiten Beacons (240.3), ein erstes Beacon-Signalstärkedatum eines ersten durch das mobile Endgerät empfangenen Beaconsignals des ersten Beacons (240.1), ein zweites Beacon-Signalstärkedatum eines zweiten durch das mobile Endgerät empfangenen Beaconsignals des zweiten Beacons (240.2) und ein Empfangszeitdatum,
- ein zweites Empfangsmodul (106, 206), eingerichtet zum wiederholenden Empfangen zeitabhängiger Abgabepunktdatensätze des ersten Abgabepunkts (224.1, 424.1, 524.1, 624.1) und des zweiten Abgabepunkts (224.2, 424.2, 524.2, 624.2),
- wobei jeder zeitabhängige Abgabepunktdatensatz zumindest enthält:
- ein Zustandserfassungszeitdatum und wenigstens eines von
- einem ersten Zustandsdatum des ersten Abgabepunkts (224.1, 424.1, 524.1, 624.1) zusammen mit einer ersten Abgabepunktkennung des ersten Abgabepunkts (224.1, 424.1, 524.1, 624.1) und
- einem zweiten Zustandsdatum des zweiten Abgabepunkts (224.2, 424.2, 524.2, 624.2) zusammen mit einer zweiten Abgabepunktkennung des zweiten Abgabepunkts (224.2, 424.2, 524.2, 624.2).
- ein Gruppierungsmodul (1), eingerichtet zum zeit-, zähler- und/ oder anlassbezogenen Bilden von Datensatzgruppen aus den empfangenen Abgabepunkdatensätzen und Endgerätedatensätze,
- ein Bestimmungsmodul (110, 210), eingerichtet zum Bestimmen zumindest einer ersten Zuordnungswahrscheinlichkeit über eine Zuordnung des ersten Abgabepunkts (224.1, 424.1, 524.1, 624.1) zu dem ersten mobilen Endgerät (242, 442, 542, 642) und einer zweiten Zuordnungswahrscheinlichkeit über eine Zuordnung des zweiten Abgabepunkts (224.2, 424.2, 524.2, 624.2) zu dem ersten mobilen Endgerät (242, 442, 542, 642), basierend auf den Daten gebildeten Datensatzgruppen, und
- ein Zuordnungsmodul (112, 212), eingerichtet zum Zuordnen des ersten Abgabepunkts (224.1, 424.1, 524.1, 624.1) oder des zweiten Abgabepunkts (224.2, 424.2, 524.2, 624.2) zu dem ersten mobilen Endgerät (242, 442, 542, 642), zumindest basierend auf einem Auswerten der ersten Zuordnungswahrscheinlichkeit und der zweiten Zuordnungswahrscheinlichkeit.

15. Energieabgabesystem (222, 422, 522, 622), umfassend:
- ein Hintergrundsystem (100, 200) nach Anspruch 14, und
- zumindest einen ersten Abgabepunkt (224.1, 424.1, 524.1, 624.1) und einen zweiten Abgabepunkt (224.2, 424.2, 524.2, 624.2),
- wobei der erste Abgabepunkt (224.1, 424.1, 524.1, 624.1) und der zweite Abgabepunkt (224.2, 424.2, 524.2, 624.2) zumindest eine erste Abgabevorrichtung (226.1) mit einem ersten Beacon (240.1) und eine zweite Abgabevorrichtung (226.3) mit einem zweiten Beacon (240.3) umfassen.
